(19) Europäisches Patentamt
European Patent Office
Office européen des brevets

(11) **EP 3 843 308 B1**

(12) **FASCICULE DE BREVET EUROPEEN**

(45) Date de publication et mention
de la délivrance du brevet:
**18.09.2024 Bulletin 2024/38**

(21) Numéro de dépôt: **20216435.6**

(22) Date de dépôt: **22.12.2020**

(51) Classification Internationale des Brevets (IPC):
**H04L 1/06** *(2006.01)* **H04L 25/02** *(2006.01)*
**H04L 27/26** *(2006.01)*

(52) Classification Coopérative des Brevets (CPC):
**H04L 1/0631; H04L 1/0668; H04L 25/0212;
H04L 25/0224; H04L 27/2607; H04L 27/261;
H04L 27/2647; H04L 27/2675**

(54) **PROCÉDÉ ET SYSTÈME DE RÉCEPTION ET D'ÉGALISATION D'UN SIGNAL ÉMIS AVEC UN CODAGE ALAMOUTI PAR BLOCS EN PRÉSENCE D'INTERFÉRENCES ÉVENTUELLES**

VERFAHREN UND SYSTEM FÜR DEN EMPFANG UND DIE ENTZERRUNG EINES MIT EINEM BLOCKKODIERVERFAHREN VOM TYP ALAMOUTI ÜBERTRAGENEN SIGNALS BEI VORHANDENSEIN MÖGLICHER INTERFERENZEN

METHOD AND SYSTEM FOR RECEIVING AND EQUALISING A SIGNAL EMITTED WITH ALAMOUTI CODING BY BLOCKS IN THE PRESENCE OF POSSIBLE INTERFERENCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2019 FR 1915646**

(43) Date de publication de la demande:
**30.06.2021 Bulletin 2021/26**

(73) Titulaire: **THALES**
**92400 Courbevoie (FR)**

(72) Inventeur: **PIPON, François**
**92622 GENNEVILLIERS CEDEX (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**FR-A1- 3 046 311**

- **S. ZHOUG. GIANNAKIS: "Single-Carrier Space-Time Block-Coded Transmissions over Frequency-Selective Fading Channels", IEEE TRANS. ON INFO. THEORY, vol. 49, no. I, January 2003 (2003-01-01), pages 164 - 179, XP002800891**
- **AL-DHAHIR N: "Single-carrier frequency-domain equalization for space-time block-coded transmissions over frequency-selective fading channels", IEEE COMMUNICATIONS LETTERS, IEEE SERVICE CENTER, PISCATAWAY, NJ, US, vol. 5, no. 7, 1 July 2001 (2001-07-01), pages 304 - 306, XP011429862, ISSN: 1089-7798, DOI: 10.1109/4234.935750**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé et un système de réception et d'égalisation d'un signal émis selon le codage Alamouti par blocs, en présence d'interférences éventuelles.

Elle s'applique dans des systèmes de réception multi entrées multi sorties ou MIMO (Multiple Input Multiple Output), dans les domaines de radiocommunication. Elle est par exemple mise en oeuvre dans des réseaux de communication civils de quatrième et cinquième génération 4G et 5G.

Les systèmes de radiocommunications sont fortement affectés par le phénomène d'évanouissement plus connu sous le terme anglo-saxon fading, qui peut causer des variations du niveau de signal reçu de quelques dB à quelques dizaines de dB sur des échelles de l'ordre de la longueur d'onde. Pour pallier à ce phénomène, il est particulièrement intéressant d'exploiter la diversité spatiale en réception en utilisant un réseau composé de plusieurs antennes qui reçoivent des états de fading décorrélés. Un grand nombre de traitements, entrée unique sorties multiples, SIMO, permettant d'exploiter la diversité spatiale en réception, en absence comme en présence d'interférences, ont ainsi été décrits dans la littérature, par exemple dans les demandes de brevets FR1502720, FR1601894 et FR9514914.

La diversité spatiale peut également être présente en émission et de nombreux systèmes entrées multiples sortie unique ou MISO et multiples entrées multiples sorties ou MIMO permettant son exploitation en utilisant un schéma de codage à l'émission ont été décrits et étudiés dans la littérature.

Parmi ces schémas, le multiplexage spatial de trains binaires indépendants permet de transmettre simultanément, à puissance et à bande constantes par rapport à un système entrée unique sortie unique ou SISO de référence, plusieurs trains binaires indépendants multiplexés spatialement en fonction de l'état des canaux de propagation entre les antennes d'émission et de réception. La séparation des trains binaires en réception se fait alors spatialement et requiert idéalement une orthogonalité des canaux de propagation associés. Pour cette raison, cette technique est bien adaptée aux environnements très perturbés, à de nombreux réflecteurs. En particulier, un système MIMO à K antennes en émission et en réception permet le multiplexage spatial de $K$ trains binaires indépendants et offre un débit de transmission $K$ fois supérieur à celui d'un système SISO à bande et puissance émise constantes. L'inconvénient de ces systèmes est qu'ils sont adaptés aux transmissions avec un fort rapport signal à bruit pour que l'optimisation du débit soit efficace.

Lorsque l'objectif d'un traitement MIMO est avant tout d'obtenir une augmentation de portée à puissance émise constante ou une réduction de la puissance émise à portée constante, un autre schéma de codage plus adapté aux besoins a été défini dans la littérature : le schéma de codage décrit par Alamouti dans la référence "A simple transmit diversity technique for wireless communications", IEEE Journal on Selected areas in Communications, Vol 16, No8, pp. 1451-1458, Oct. 1998. Ce schéma est particulièrement intéressant, car il permet une pleine exploitation de la diversité spatiale à l'émission, avec une puissance de calcul limitée. Il est basé sur deux antennes d'émission, mais d'autres schémas basés sur le même principe peuvent également être envisagés pour un plus grand nombre d'antennes. Le schéma de codage Alamouti peut être utilisé directement sur les canaux à fading plat pour une Forme d'Onde FO série ou sur les canaux à fading sélectif (c'est-à-dire avec des multi-trajets générant de l'Interférence Inter-Symbole IIS) avec une FO parallèle. L'inconvénient d'une FO parallèle est qu'elle possède un rapport entre l'amplitude du pic du signal et la valeur efficace du signal ou PAPR important, ce qui entraîne une perte non négligeable sur la puissance d'émission par rapport à une FO série.

Afin de permettre l'utilisation du principe du codage Alamouti en présence de fading sélectif pour une FO série, le schéma de codage Alamouti par blocs, extension du schéma de codage divulgué par Alamouti, a été décrit par exemple par S. ZHOU, G. GIANNAKIS dans la référence "Single-Carrier Space-Time Block-Coded Transmissions over Frequency-Selective Fading Channels", IEEE Trans. on Info. Theory, Vol 49, No1, pp. 164-179, Jan. 2003.

En l'absence d'interférence, l'article de Zhou et Giannakis décrit les traitements MISO et MIMO permettant la réception du signal émis suivant le codage Alamouti par blocs.

En présence d'interférences, les solutions actuelles utilisent une méthode de blanchiment, décrite dans la littérature pour les traitements SIMO, qui peut également s'utiliser pour un traitement MIMO : après estimation de R, la matrice de corrélation du bruit total (bruit + interférences éventuelles), le signal est filtré par la matrice $R^{-1/2}$, l'inverse de la racine carrée de $R$. En notant $x(n)$, le vecteur des signaux reçus à l'instant d'échantillonnage $n$, on obtient ainsi en sortie le signal $y(n) = R^{-1/2} x(n)$. Comme la matrice de corrélation du bruit total présent dans $y(n)$ est égale à l'identité, l'influence des interférences a été éliminée et une démodulation MIMO en absence d'interférences peut être mise en oeuvre. L'inconvénient de cette solution est qu'elle est coûteuse en puissance de calcul. L'un des objectifs de la présente invention est de réaliser la réception d'un signal émis avec le schéma de codage Alamouti par blocs en présence d'interférences éventuelles avec une puissance de calcul réduite.

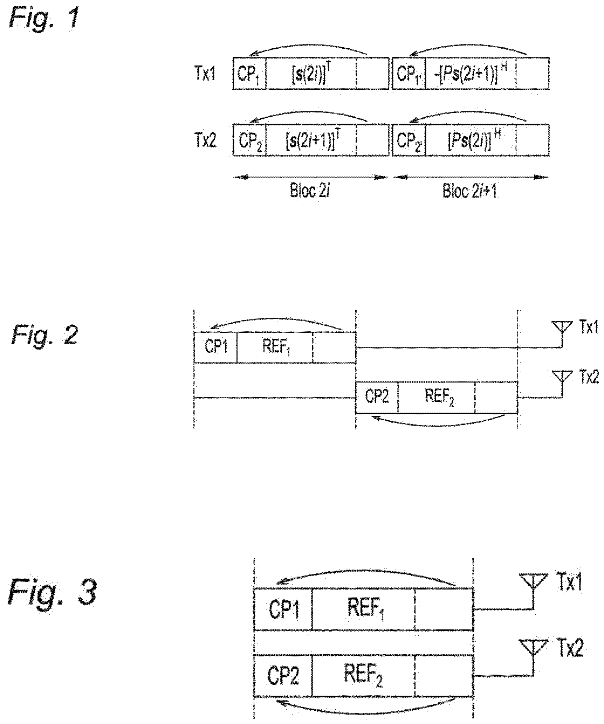

Le codage Alamouti par blocs consiste à émettre une suite de symboles utiles suivant le schéma décrit à la figure 1. Dans ce schéma, les symboles sont émis par groupes de deux blocs de $L_{DATA}$ symboles avec les notations suivantes :

s(i) est le i$^{\text{ème}}$ bloc de symboles à émettre : s(i) = [s(i. $L_{DATA}$), s(i. $L_{DATA}$ + 1), ... , s (i. $L_{DATA}$ + $L_{DATA}$ - 1)]$^T$,

où *s(n)* est le *n*$^{\text{ème}}$ symbole à émettre, et

en adoptant la convention suivante : les quantités en minuscule italique gras sont des vecteurs et les quantités en minuscule italique sont des scalaires.

P est une matrice de permutation cyclique, avec retournement du temps, qui est introduite afin de rendre possible le traitement en réception. Il existe $L_{DATA}$ matrices de permutation, définies par les relations suivantes sur les blocs de symboles : P [a(0), ..., a($L_{DATA}$ - 1)] = [a(n), ..., a(0), a($L_{DATA}$ - 1), ..., a(n + 1)]).

L'utilisation de ce schéma de codage entraîne deux contraintes sur la conception de la forme d'onde :
Le palier doit contenir un nombre pair de blocs de données utiles pour que le codage puisse se réaliser,

Le canal doit être stationnaire ou quasi stationnaire sur deux blocs consécutifs, i.e., le canal varie « peu » sur les deux blocs.

Afin d'être en mesure de démoduler des symboles émis, le récepteur doit pouvoir effectuer la synchronisation et l'estimation du canal de propagation entre chaque voie d'émission et chaque voie de réception. A cet effet, des séquences d'apprentissage, ou séquences de références REF, formées de $L_{REF}$ symboles, correspondant à des séquences de symboles connus à l'émission et à la réception, sont émises sur chaque antenne d'émission. Ces séquences sont notées $d_k(n)$, pour k = 1,2 et n = 1, ..,$L_{REF}$- 1, avec k le numéro de l'antenne d'émission. Chacune de ces séquences est précédée de son propre préfixe cyclique CP de taille $L_{CP}$.

Une façon simple pour la synchronisation serait d'émettre alternativement une telle séquence d'apprentissage sur chaque voie de réception, suivant le schéma de la figure 2. Mais cette solution, si elle évite aux séquences d'apprentissage REF$_1$, REF$_2$ précédées chacune de leur préfixe cyclique CP$_1$, CP$_2$ et émises par chacune des deux antennes Tx$_1$, Tx$_2$, d'interférer l'une avec l'autre, présente l'inconvénient de réduire le débit utile. Il est préférable d'émettre en même temps deux séquences différentes REF$_1$, REF$_2$ sur les deux antennes Tx$_1$, Tx$_2$ suivant le schéma de la figure 3. Afin d'optimiser les performances du système, il est intéressant, si possible, d'obtenir une autocorrélation nulle sur la longueur de la taille du préfixe cyclique CP pour les deux séquences :

$$E[d_k(n)d_k(n-m)^*] = 0 \text{ pour } k = 1,2 \text{ et } m = 0, ..., L_{CP}$$

ainsi qu'une intercorrélation nulle sur la longueur de la taille du préfixe cyclique entre les deux séquences :

$$E[d_1(n)d_2(n-m)^*] = 0 \text{ pour } m = 0, ..., L_{CP}.$$

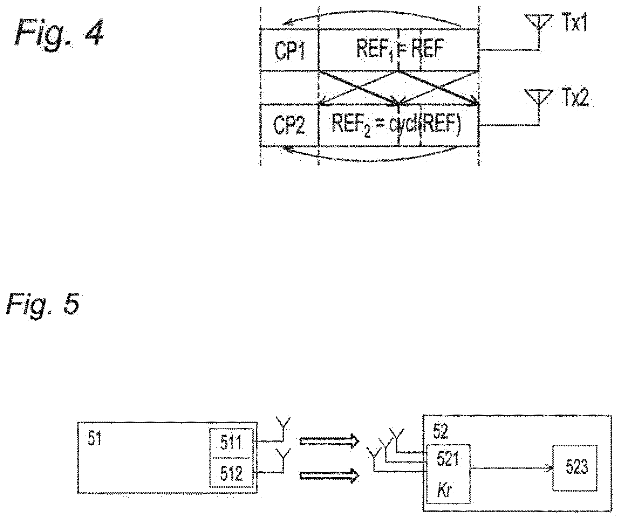

Dans un mode de réalisation, les séquences d'apprentissages $d_k(n)$ émises sur chacune des deux antennes sont avantageusement formées à partir d'une séquence CAZAC (Constant Amplitude Zero AutoCorrelation) d(n) de longueur $L_{REF}$ suivant le schéma de la figure 4 : la séquence REF$_1$ émise sur la première antenne Tx$_1$, notée $d_1(n)$, est égale à *d(n)* et la séquence REF$_2$ émise sur la deuxième antenne Tx$_2$, notée d$_2$(n), est égale à la séquence d(n) shiftée cycliquement d'une valeur $L_c$ :

$$[d_2(0), ..., d_2(L_{REF} - 1)] = [d(L_c), ... d(L_{REF} - 1), d(0), ..., d(L_c - 1)]$$

On choisit dans la suite de la description un décalage ou shift cyclique correspondant à la moitié de la longueur de la séquence REF : $L_c = L_{REF}/2$.

Un objet de l'invention est donc de proposer un procédé de réception et d'égalisation de signal en présence d'interférences éventuelles, émis avec le codage Alamouti par blocs ou un codage similaire, peu coûteux en puissance de calcul.

FR 3046311A divulgue un procédé de réception d'un signal comprenant une séquence d'apprentissage formée de symboles connus et une séquence utile. Le procédé concerne essentiellement le calcul d'une matrice de corrélation du bruit et de brouilleurs avec une complexité très réduites afin d'améliorer un procédé d'égalisation multivoie antibrouillé.

Dans la suite, les notations suivantes sont utilisées :

$K_e$ : le nombre d'antennes d'émission,

$K_r$ : le nombre d'antennes de réception,

$N_{REF}$ : le nombre de séquences de référence dans le palier ($N_{REF} \geq 1$),

$L_{CP}$ : le nombre de symboles du préfixe cyclique CP utilisé sur chaque séquence de référence REF et chaque séquence de données utiles DATA,

$L_{REF}$ : le nombre de symboles de la séquence de référence REF auquel il faut ajouter $L_{CP}$ symboles pour le préfixe cyclique CP. La taille totale de la séquence REF est égale à $L_{REF}+L_{CP}$,

$L_{DATA}$ : le nombre de symboles des blocs DATA (auquel il faut ajouter le préfixe cyclique CP),

RI désigne une réponse impulsionnelle de canal (fréquentielle ou temporelle, suivant les précisions apportées à chaque fois dans la description).

L'invention concerne un procédé de réception et d'égalisation anti-interférence d'un signal émis suivant un codage Alamouti par blocs dans un système multivoies comprenant au moins un émetteur avec $K_e$ = deux voies d'émission et un récepteur avec $K_r$ voies de réception, ledit signal comportant au moins une séquence d'apprentissage formée de symboles connus et au moins une séquence de données utiles formée de symboles inconnus à démoduler comportant au moins les étapes suivantes :

- Synchroniser en temps/fréquence les signaux reçus par le récepteur,

- Estimer les réponses impulsionnelles en fréquence des canaux de propagation associés à chacune des $K_e$ voies d'émission,

- Estimer une matrice de corrélation du bruit total, R(f),

- Sur chaque voie de réception $k_r$ appartenant à [$1...K_r$], effectuer :

Une transformée de Fourrier discrète TFD sur un premier type de bloc de données utiles 2i,
$x'(2i)(f)$ = TFD(x(2i)(n)), où $x(2i)(n)$ est le vecteur signal reçu sur le bloc 2i de longueur $L_{DATA}$, , $f = 0,..., L_{DATA}$ -1et $n =$ 0,..., $L_{DATA}$-1, et

une opération de conjugaison, suivie d'une permutation par la matrice P de permutation cyclique avec retournement du temps utilisée pour le codage Alamouti par blocs réalisé à l'émission et d'une opération de transformée de Fourier discrète TFD sur un deuxième bloc de données utiles 2i + 1,

$x'(2i + 1)(f)$ = TFD($Px^*(2i + 1)(n)$), où x(2i + 1)(n) est le vecteur signal reçu sur le bloc 2i + 1 de longueur $L_{DATA}$ avec $/ = 0,..., L_{DATA}$ -1 et $n = 0,..., L_{DATA}$-1

Où * est l'opérateur de conjugaison et la matrice P est une matrice de permutation cyclique avec retournement du temps, définie sur un bloc de symboles utiles $a(n)$ de longueur $L_{DATA}$ par la relation suivante:

P [a(0), ...,a($L_{DATA}$ - 1)] = [a(n), ...,a(0),a($L_{DATA}$ - 1), ...,a(n + 1)]) où il existe $L_{DATA}$ matrices P possibles, chacune étant définie par le premier élément a(n) du bloc de sortie de la permutation par la matrice P, la même matrice de permutation à l'émission et à la réception étant utilisée.

étant entendu qu'il y a LDATA matrices P possibles, chacune étant définie par le premier élément a(n) du bloc de sortie de la permutation par la matrice P. Chacune de ces matrices P peut être utilisée indifféremment, l'important est d'utiliser la même matrice à l'émission et à la réception.

- Calculer des vecteurs de pondérations $w_{ke}(f)$ associés à chacune des voies d'émission ($k_e = 1,..,Ke)$ :

$$w_{k_e}(f) = \frac{R(f)^{-1}h_{k_e}(f)}{1+\sum_{e=1}^{Ke} h_e(f)^H R(f)^{-1}h_e(f)}$$

avec $R(f)^{-1}$ l'inverse de la matrice de corrélation du bruit total, $h_{ke}(f)$ le vecteur contenant les réponses impulsionnelles fréquentielles du canal de propagation sur les $K_r$ voies de réception pour la voie d'émission $k_e$ $l$ =0,...., $L_{DATA}$-1 l'indice de la fréquence ,

- Effectuer un filtrage sur chaque fréquence des deux blocs de données utiles à l'aide des pondérations $w_{ke}(f)$ pour $k_e$ = 1 et $k_e$ = 2,
  sur le bloc 2i avec :

$$y(2i)(f) = w_1^H(f)\, x'(2i)(f) + w_2^T(f)\, x'(2i+1)(f)\,, \text{pour } f = 0, \dots, L_{DATA} - 1,$$

$w_1^H$ transposé conjugué du vecteur de pondération pour $k_e$ =1, $w_2^T$ transposé du vecteur de pondération pour $k_e$ =2,
sur le bloc 2i + 1 avec :

$$y(2i+1)(f) = w_2^H(f)\, x'(2i)(f) - w_1^T(f)\, x'(2i+1)(f)\,, \text{pour } f = 0, \dots, L_{DATA} - 1$$

(604), afin d'estimer respectivement les symboles correspondant au bloc 2i et au bloc 2i + 1,

- Effectuer une opération de transformée de Fourier inverse TFD$^{-1}$ sur les signaux y(2i)(f) et y(2i + 1)(f) pour obtenir une estimation des symboles émis respectivement sur les blocs 2i et 2i + 1, et décoder les symboles utiles émis.

On utilise, par exemple, deux blocs de données *2i et 2i* + 1 consécutifs pour coder à l'émission et estimer les symboles à la réception.
Le procédé peut comporter en outre une étape de normalisation des symboles estimés en sortie de la transformée de Fourier inverse TFD$^{-1}$ par un facteur $\eta$ défini par son estimée :

$$\hat{\eta} = \frac{1}{L_{DATA}}\sum_{f=0}^{L_{DATA}-1} \frac{h_1(f)^H R(f)^{-1}h_1(f)+h_2(f)^H R(f)^{-1}h_2(f)}{1+h_1(f)^H R(f)^{-1}h_1(f)+h_2(f)^H R(f)^{-1}h_2(f)}.$$

L'étape de décodage des symboles prend, par exemple, en compte la valeur du rapport signal sur bruit estimé $\widehat{SNR} = \frac{\hat{\eta}}{1-\hat{\eta}}$ obtenu sur chaque groupe de deux blocs de symboles pour le calcul des rapports de vraisemblance LLR utilisés dans l'algorithme de décodage.
Les séquences d'apprentissage peuvent être des séquences indépendantes sur les voies d'émission.
On estime, par exemple, la réponse impulsionnelle fréquentielle du canal associée à chaque antenne d'émission $k_e$ et à chaque chaque antenne de réception $k_r$ pour $f$ = 0, ..., $L_{DATA}$-1 en exécutant les étapes suivantes :

- Effectuer une transformation de Fourier discrète TFD du signal reçu après synchronisation sur chaque séquence de référence REF d'indice i, i = 1, ..., $N_{REF}$, $N_{REF}$ étant le nombre de séquences de référence dans un palier ($N_{REF}$ $\geq$ 1) pour chaque antenne de réception $k_r$:
  $y_{kr,i}(f) = TFD[x_{kr,i}(n)\,]$, où $x_{kr,i}(n)$ est le signal reçu sur la voie de réception $k_r$ et la séquence REF i, pour $n_0 \leq n < n_0 + L_{REF} - 1$ avec $n_0$ la position de synchronisation, les indices n correspondant aux échantillons temporels échantillonnés au rythme-symbole, avec a $\leq l < L_{REF} - 1$ où $L_{REF}$ est le nombre de symboles de la séquence REF
- Précalculer la transformée de Fourier discrète TFD de la séquence de référence émise sur l'antenne d'émission $k_e$ pour le bloc REF d'indice i,
  avec :

$$d_{k_e,i}(f) = TFD\big[d_{k_e,i}(n)\big]$$

pour $0 \leq l < L_{REF}$ - 1 : $d_{ke,i}(f)$ étant la TFD de la séquence de référence émise sur l'antenne d'émission $k_e$ pour la séquence REF d'indice i

- Effectuer une estimation préliminaire de la réponse impulsionnelle fréquentielle du canal :

$$h_{k_e,k_r,i}^{prélim}(f) = \frac{y_{k_r,i}(f)}{d_{k_e,i}(f)}, \text{ pour } f = 0, \ldots, L_{REF} - 1,$$

- Effectuer une estimation préliminaire de la réponse impulsionnelle temporelle du canal à partir d'une opération de transformée de Fourrier discrète inverse, TFD$^{-1}$, pour chaque bloc REF d'indice i, sur chaque antenne d'émission $k_e$ et sur chaque antenne de réception $k_r$:

$$h_{k_e,k_r,i}^{prélim}(n) = \text{ TFD}^{-1}\Big[h_{k_e,k_r,i}^{prélim}(f)\Big], \text{ pour } n, f = 0, \ldots, L_{REF} - 1,$$

- Réduire le bruit de la réponse impulsionnelle temporelle préliminaire et obtenir des réponses impulsionnelles temporelles associées à chaque voie d'émission par les deux étapes suivantes :
- Forcer à zéro les réponses impulsionnelles temporelles du canal $h_{ke,kr,i}$ sur une plage pour laquelle les réponses ne contiennent pas d'influence des multi-trajets utiles, en dehors de la taille du préfixe cyclique CP :

$$h_{k_e,k_r,i}(n) = \begin{cases} h_{k_e,k_r,i}^{prélim}(n) & \text{pour} \quad n \in [0; L_{CP} + i_0] \cup [L_{REF} - i_1; L_{REF} - 1] \\ 0 & \text{pour} \quad n \in [L_{CP} + i_0 + 1; L_{REF} - 1 - i_1] \end{cases}$$

où $i_0$ et $i_1$ sont deux entiers positifs ou nuls, $L_{CP}$ est le nombre de symboles du préfixe cyclique CP, utilisé sur chaque séquence de référence REF et chaque séquence de données utiles DATA, et la taille totale de la séquence REF est égale à $L_{REF}+L_{CP}$

- Pour chaque voie d'émission $k_e$ et pour chaque voie de réception $k_r$ moyenner les réponses impulsionnelles temporelles de canal obtenues sur chaque séquence REF sur les $N_{REF}$ séquences du palier (dans le cas où $N_{REF} > 1$) :

$$h_{k_e,k_r}(n) = \frac{1}{N_{REF}} \sum_{i=1}^{N_{REF}} h_{k_e,k_r,i}(n), \quad \text{pour } n \in [0; L_{REF} - 1]$$

- Déterminer la réponse impulsionnelle fréquentielle du canal utilisée pour démoduler les blocs de données par les deux étapes suivantes :
- Appliquer une opération de « zéro-padding » sur les réponses impulsionnelles temporelles moyennées afin de permettre l'interpolation de la réponse impulsionnelle de la longueur $L_{REF}$ à la longueur $L_{DATA}$ (dans le cas où $L_{DATA} > L_{REF}$) :

$$\begin{cases} h_{k_e,k_r}^{ZP}(n) = h_{k_e,k_r}(n) & \text{pour} \quad n = [0; L_{CP} + i_0] \\ h_{k_e,k_r}^{ZP}(n) = 0 & \text{pour} \quad n = [L_{CP} + i_0 + 1; L_{DATA} - 1 - i_1] \\ h_{k_e,k_r}^{ZP}(n) = h_{k_e,k_r}(n - L_{DATA} + L_{REF}) & \text{pour} \quad n = [L_{DATA} - i_1; L_{DATA} - 1] \end{cases}$$

avec ZP : le zéro padding ou remplissage à zéro (ZP),
- Estimer les réponses impulsionnelles de canal sur la longueur $L_{DATA}$, notées $h_{ke,kr}(f)$ à l'aide de la transformée de Fourier des réponses impulsionnelles temporelles du canal « zéro-paddées » :

$$h_{k_e,k_r}(f) = TFD\left[h_{k_e,k_r}^{ZP}(n)\right] \text{ pour } n, f = 0, \dots, L_{DATA} - 1.$$

On peut estimer la matrice de corrélation du bruit total R(f) = R en utilisant les échantillons de bruit estimés sur l'ensemble des séquences d'apprentissage :

$$\hat{R} = \frac{1}{N_{REF}}\sum_{i=1}^{N_{REF}}\left(\sum_{n\in I_b} \boldsymbol{b_i}(n)\boldsymbol{b_i}(n)^H\right)$$

avec le vecteur de bruit reçu pour chaque échantillon n de chaque séquence d'apprentissage i = 1, ..., $N_{REF}$, estimé sur les échantillons de la réponse impulsionnelle temporelle préliminaire du canal associée à l'une des deux antennes d'émission correspondant aux échantillons de bruit pour n ∈ $I_b$ = [$L_{CP}$ + $i_0$ + 1; $L_{REF}$ - 1 - $i_1$] :

$$\boldsymbol{b_i}(n) = [b_{1,i}(n) \dots b_{K_r,i}(n)]^T, \text{ pour } n \in I_b = [L_{CP} + i_0 + 1; L_{REF} - 1 - i_1]$$

avec

$$b_{k_r,i}(n) = h_{1,k_r,i}^{prélim}(n).$$

On utilise par exemple des séquences de Cazac pour les séquences d'apprentissage, la deuxième voie d'émission émettant la même séquence que la première voie, après avoir appliqué un décalage cyclique $L_c = L_{REF/2}$.

Pour estimer la RI fréquentielle du canal associée à chaque antenne d'émission $k_e$ et à chaque antenne de réception $k_r$ pour $f$ = 0, ..., $L_{DATA}$-1 on exécute par exemple les étapes suivantes :

[0032] - Effectuer une transformation de Fourier discrète TFD du signal reçu après synchronisation sur chaque séquence de référence REF associée à un bloc de données :

$$y_{kr,i}(f) = TFD\left[x_{kr,i}(n)\right], \text{ pour } n_0 \le n < n_0 + L_{REF} - 1$$

avec $n_0$ la position de synchronisation, les indices n correspondant aux échantillons temporels échantillonnés au rythme-symbole, et avec 0 ≤ $f$ < $L_{REF}$ - 1

- Précalculer la transformée de Fourier discrète de la séquence de référence émise sur la première antenne d'émission pour le bloc d'indice i :

$$d_i(f) = TFD[d_i(n)], \text{ pour } 0 \le f < L_{REF} - 1 :$$

- Effectuer une estimation préliminaire de la réponse impulsionnelle fréquentielle du canal :

$$h_{k_r,i}^{prélim}(f) = \frac{y_{k_r,i}(f)}{d_i(f)}, \text{ pour } f = 0, \dots, L_{REF} - 1,$$

- Effectuer une estimation préliminaire de la RI temporelle du canal à partir d'une opération de transformée de Fourier inverse, TFD$^{-1}$:

$$h_{k_r,i}^{prélim}(n) = \text{TFD}^{-1}\left[h_{k_r,i}^{prélim}(f)\right], \text{ pour } n, f = 0, \dots, L_{REF} - 1$$

- Séparer les réponses impulsionnelles temporelles du canal correspondant à chaque voie d'émission dans la réponse impulsionnelle temporelle $h_{k_r,i}^{prélim}(n)$ et forcer à zéro les réponses impulsionnelles temporelles du canal sur une plage pour laquelle les réponses ne contiennent pas d'influence des multi-trajets utiles, en dehors de la taille du préfixe cyclique CP :

$$h_{1,k_r,i}(n) = \begin{cases} h_{k_r,i}^{prélim}(n) & \text{pour} & n \in [0; L_{CP} + i_0] \\ 0 & \text{pour} & n \in \left[L_{CP} + i_0 + 1; \frac{L_{REF}}{2} - 1 - i_1\right] \\ h_{k_r,i}^{prélim}\left(n + \frac{L_{REF}}{2}\right) & \text{pour} & n \in \left[\frac{L_{REF}}{2} - i_1; \frac{L_{REF}}{2} - 1\right] \end{cases}$$

$$h_{2,k_r,i}(n) = \begin{cases} h_{k_r,i}^{prélim}\left(n + \frac{L_{REF}}{2}\right) & \text{pour} & n \in [0; L_{CP} + i_0] \\ 0 & \text{pour} & n \in \left[L_{CP} + i_0 + 1; \frac{L_{REF}}{2} - 1 - i_1\right] \\ h_{k_r,i}^{prélim}(n) & \text{pour} & n \in \left[\frac{L_{REF}}{2} - i_1; \frac{L_{REF}}{2} - 1\right] \end{cases}$$

- Pour chaque voie d'émission $k_e$ et pour chaque voie de réception $k_r$ moyenner les réponses impulsionnelles temporelles de canal obtenues sur chaque séquence REF sur les $N_{REF}$ séquences du palier (dans le cas où $N_{REF} > 1$) :

$$h_{k_e,k_r}(n) = \frac{1}{N_{REF}} \sum_{i=1}^{N_{REF}} h_{k_e,k_r,i}(n), \quad \text{pour } n \in [0; L_{REF}/2 - 1]$$

- Déterminer la réponse impulsionnelle fréquentielle du canal utilisée pour démoduler les blocs de données par les deux étapes suivantes :

- Appliquer une opération de « zéro-padding » sur les réponses impulsionnelles temporelles moyennées afin de permettre l'interpolation de la réponse impulsionnelle de la longueur $L_{REF}/2$ à la longueur $L_{DATA}$ (dans le cas où $L_{DATA} > L_{REF}/2$) :

$$\begin{cases} h_{k_e,k_r}^{ZP}(n) = h_{k_e,k_r}(n) & \text{pour} & n = [0; L_{CP} + i_0] \\ h_{k_e,k_r}^{ZP}(n) = 0 & \text{pour} & n = [L_{CP} + i_0 + 1; L_{DATA} - 1 - i_1] \\ h_{k_e,k_r}^{ZP}(n) = h_{k_e,k_r}(n - L_{DATA} + L_{REF}/2) & \text{pour} & n = [L_{DATA} - i_1; L_{DATA} - 1] \end{cases}$$

avec ZP : le zéro padding ou remplissage à zéro (ZP),
où $i_0$ et $i_1$ sont deux entiers positifs ou nuls,

- Estimer les réponses impulsionnelles de canal sur la longueur $L_{DATA}$, notées $h_{ke,kr}(f)$ à l'aide de la transformée de Fourier des réponses impulsionnelles temporelles du canal « zéro-paddées »,

$$h_{k_e,k_r}(f) = TFD\left[h_{k_e,k_r}^{ZP}(n)\right] \text{ pour } n, f = 0, \dots, L_{DATA} - 1.$$

On estime, par exemple, la matrice de corrélation du bruit total R(f) = R en utilisant les échantillons de bruit estimés sur l'ensemble des séquences d'apprentissage :

$$\hat{R} = \frac{1}{N_{REF}} \sum_{i=1}^{N_{REF}} \left( \sum_{n \in I_b} \boldsymbol{b}_i(n) \boldsymbol{b}_i(n)^H \right)$$

Avec le vecteur de bruit reçu pour chaque échantillon n de chaque séquence d'apprentissage i = 1, ...,$N_{REF}$, estimé sur les échantillons de la réponse impulsionnelle temporelle préliminaire du canal correspondant aux échantillons de bruit pour

$$n \in I_b = \left[ L_{CP} + i_0 + 1; \frac{L_{REF}}{2} - 1 - i_1 \right] \cup \left[ \frac{L_{REF}}{2} + L_{CP} + i_0 + 1; L_{REF} - 1 - i_1 \right]$$

$$\boldsymbol{b}_i(n) = [b_{1,i}(n) \dots b_{K,i}(n)]^T,$$

avec

$$b_{k_r,i}(n) = h_{k_r,i}^{prélim}(n).$$

L'invention concerne aussi un système de réception et d'égalisation anti-interférence d'un signal émis suivant un codage Alamouti par blocs dans un système multivoies comprenant au moins un émetteur avec $K_e$ = deux voies de réception et un récepteur avec $K_r$ voies de réception, ledit signal comportant au moins une séquence d'apprentissage formée de symboles connus et au moins une séquence de données utiles formée de symboles inconnus à démoduler, caractérisé en ce que le récepteur comporte un processeur relié aux voies de réception et configuré pour exécuter les étapes du procédé selon l'invention. Le système peut être un système de communication 4G.

D'autres caractéristiques, détails et avantages de l'invention ressortiront à la lecture de la description faite en référence aux dessins annexés donnés à titre d'exemples non limitatifs et qui représentent, respectivement :

[Fig.1] Un rappel du schéma de codage Alamouti par blocs,

[Fig.2] Un exemple de séquences de références émises alternativement sur deux antennes,

[Fig.3] Un exemple de séquences de références émises simultanément sur deux antennes,

[Fig.4] Une illustration de la formation des séquences de référence émises sur les deux antennes à partir d'une séquence de CAZAC,

[Fig.5] Un exemple d'architecture d'un système pour la mise en oeuvre de l'invention,

[Fig.6] Un schéma du traitement des signaux à la réception selon l'invention,

[Fig.7] Une figure illustrant les étapes 3 et 4, dans le cas général, de la construction des RI temporelles de canal avec mise à zéro et « zéro padding », pour chaque voie d'émission $k_e$ et chaque voie de réception $k_r$,

[Fig.8] Une figure illustrant la construction des RI temporelles de canal dans le cas où les séquences de référence transmises par les deux antennes d'émission sont formées à partir d'une séquence CAZAC suivant le schéma de la figure 4,

[Fig.9] Une figure illustrant pour un système comprenant deux voies d'émission, la construction des RI temporelles de canal avec « zéro padding » dans le cas où les séquences de référence transmises par les deux antennes d'émission sont formées à partir d'une séquence CAZAC suivant le schéma de la figure 4.

L'exemple qui suit est donné à titre illustratif et nullement limitatif pour un système MIMO comprenant un émetteur 51 comprenant au moins deux antennes d'émission $K_e$ référencées 511, 512 sur la figure, et un récepteur 52 comprenant $K_r$ antennes de réception représentées par un bloc 521 pour des raisons de simplification. Le récepteur est équipé d'un processeur 523 recevant les informations reçues au niveau des antennes et configuré pour exécuter les étapes du procédé détaillées par la suite. La trame émise est formée, sur chaque palier, d'une succession de blocs de données utiles et de séquences de références, notées respectivement DATA et REF par la suite.

Afin d'éviter les interférences entre blocs, un préfixe cyclique CP, dont la longueur $L_{CP}$ est supérieure ou égale à la taille attendue du canal de propagation, est ajouté à chaque bloc de séquence de référence REF ou de données DATA transmis, de sorte que, sur chaque bloc de symboles, l'Interférence Inter-Symbole IIS provienne uniquement des symboles appartenant au bloc lui-même.

Le procédé selon l'invention concerne le traitement des informations des signaux au niveau du récepteur qui reçoit un signal émis selon un codage Alamouti par blocs et qui, en présence d'interférences éventuelles, va effectuer sur chaque fréquence une double recombinaison :
La première pour profiter de la diversité spatiale en réception et éliminer l'influence des interférences éventuelles,

La seconde pour profiter de la diversité spatiale en émission.

Les étapes de traitement des signaux qui vont être décrites sont exécutées par le processeur du récepteur.

La première recombinaison fait intervenir un Filtre Adapté Spatial à chaque fréquence, et elle est donc basée sur le calcul de la matrice de corrélation du bruit total $R(f)$ (bruit du récepteur et des interférences) à chaque fréquence. Comme cette matrice est difficile à estimer sur chaque fréquence, le procédé selon l'invention met en oeuvre la matrice de corrélation du bruit total R (matrice de corrélation « moyenne » sur toutes les fréquences de la bande utile), qui peut être estimée comme décrit par la suite. Le récepteur ainsi mis en oeuvre est optimal lorsque le bruit total est blanc temporellement, i.e., R(f) = R.

Il est aussi possible de prendre en compte les matrices de corrélation R(f) estimées sur chaque fréquence f,

$\overline{R(f)}$ ou par bloc de fréquences.

Une possibilité pour estimer la valeur de R est décrite dans le brevet FR1502720 en l'adaptant au traitement multiple entrées multiple sorties MIMO, comme il est décrit ci-après.

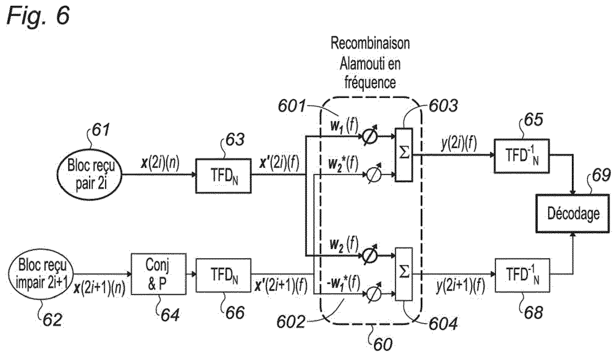

La figure 6 illustre le traitement MIMO anti-interférence mis en oeuvre par le procédé selon l'invention.

L'exemple est donné pour deux blocs DATA consécutifs, le bloc 2i, 61, et le bloc 2i + 1, 62, de longueur $L_{DATA}$. Il est aussi possible de considérer deux blocs de données non consécutifs mais proches, de façon telle que le canal ne varie pas ou peu sur les deux blocs.

Lors d'une étape préalable, le procédé va exécuter une étape de synchronisation MIMO en présence d'interférences éventuelles, selon les méthodes décrites par exemple dans le brevet FR1501813. En sortie de cette étape, le signal est échantillonné au rythme symbole.

Puis, lors d'une première étape détaillée ci-après, les RI fréquentielles des canaux de propagation $h_{1,kr}(f)$ et $h_{2,kr}(f)$ associées aux deux voies d'émission (antenne 511 et antenne 512) sont estimées de façon indépendante sur chaque voie de réception (antennes 521) $k_r = 1, ..., K_r$, avec $l = 0, ..., L_{DATA}$ - 1. Les vecteurs canaux associés aux deux voies d'émission, contenant les RI fréquentielles obtenues sur les différentes voies de réception sont notés :

$$\boldsymbol{h}_{k_e}(f) = \left[ h_{k_e,1}(f), ..., h_{k_e,K_r}(f) \right]^T \text{pour } k_e = 1,2 \quad (1)$$

La matrice de corrélation du bruit total R est également estimée lors de cette étape détaillée ci-après.

Lors d'une deuxième étape, sur chaque voie de réception $k_r$, le pré-traitement de recombinaison Alamouti par blocs est effectué sur les signaux issus des deux blocs DATA, selon la méthode décrite par exemple dans le document précité de Zhou et Giannakis :

sur le premier bloc 2i : une opération de transformée de Fourier discrète TFD , 63 :

$$x_k(2i)(n), \text{pour } n = 0, ..., L_{DATA} - 1 \xrightarrow{TFD} x'_k(2i)(f), \text{pour } f = 0, ..., L_{DATA} - 1 \quad (2)$$

sur le deuxième bloc 2i + 1 : une opération de conjugaison, suivie d'une permutation par la matrice P utilisée pour le codage Alamouti par blocs réalisé à l'émission, 64, et d'une opération de transformée de Fourier discrète TFD, 66 :

$$Px_k^*(2i + 1)(n), \text{pour } n = 0, ..., L_{DATA} - 1 \xrightarrow{TFD} x'_k(2i + 1)(f) \quad (3)$$

pour $f$ = 0, ..., $L_{DATA}$ - 1.

La troisième étape, 60, consiste à calculer des vecteurs de pondérations $w_{ke}(f)$ associés à chacune des antennes d'émission ($k_e$ = 1 et $k_e$=2), 601, 602, qui seront utilisés pour effectuer la recombinaison Alamouti par blocs avec anti-interférence sur chaque fréquence des deux blocs DATA. La valeur du coefficient de pondération s'exprime :

$$w_{k_e}(f) = \frac{R(f)^{-1} h_{k_e}(f)}{1 + h_1(f)^H R(f)^{-1} h_1(f) + h_2(f)^H R(f)^{-1} h_2(f)} \qquad (4)$$

L'exposant [H] correspond au transposé-conjugué.

$h_{ke}(f)$ est un vecteur qui comprend toutes les estimées de canal effectuées sur les différentes voies de réception, pour l'émetteur d'indice $k_e$ avec $k_e$ = 1 et $k_e$=2, suivant l'équation (1) $h_{ke}(f) = [h_{ke,1}(f), ..., h_{ke,Kr}(f)]^T$.

L'estimation du rapport signal à bruit SNR en sortie de la recombinaison Alamouti par blocs effectuée à l'issue de la quatrième et de la cinquième étape est obtenue, à partir des formules suivantes :

$$\hat{\eta} = \frac{1}{L_{DATA}} \sum_{f=0}^{L_{DATA}-1} \frac{h_1(f)^H R(f)^{-1} h_1(f) + h_2(f)^H R(f)^{-1} h_2(f)}{1 + h_1(f)^H R(f)^{-1} h_1(f) + h_2(f)^H R(f)^{-1} h_2(f)} \qquad (5)$$

$$\widehat{SNR} = \frac{\hat{\eta}}{1-\hat{\eta}} \quad (6)$$

Lors d'une quatrième étape, le procédé va effectuer une recombinaison Alamouti par blocs sur chaque fréquence des deux blocs DATA à l'aide des pondérations calculées à l'étape précédente :

603 - sur le premier bloc 2i :

$$y(2i)(f) = w_1^H(f) \, x'(2i)(f) + w_2^T(f) \, x'(2i+1)(f) \text{, pour } f = 0, ..., L_{DATA} - 1 \, (7).$$

Cette recombinaison permet d'estimer les symboles correspondant au bloc 2i

604 - sur le deuxième bloc 2i + 1 :

$$y(2i+1)(f) = w_2^H(f) \, x'(2i)(f) - w_1^T(f) \, x'(2i+1)(f) \text{, pour } f = 0, ..., L_{DATA} - 1 \quad (8)$$

Cette recombinaison permet d'estimer les symboles correspondant au bloc *2i + 1*.

Ainsi, on dispose dans le domaine fréquentiel, sur chaque bloc de réception, des symboles émis sur l'un des deux blocs, en ayant remis en phase les différentes contributions correspondant au bloc considéré par une double recombinaison de type MRC (Maximum Ratio Combining).

La première recombinaison effectuée avec les pondérations $w_{ke}(f)$ permet de remettre en phase les symboles reçus sur chaque antenne de réception, d'exploiter ainsi la diversité spatiale à la réception, et d'éliminer l'influence des interférences éventuelles.

La deuxième recombinaison, qui consiste à sommer ou à retrancher les contributions issus du filtrage par les pondérations $w_{ke}(f)$, permet de remettre en phase les symboles issus de chaque antenne d'émission et d'exploiter ainsi la diversité spatiale à l'émission.

En sortie de la quatrième étape, on obtient ainsi le signal égalisé en fréquence correspondant aux deux blocs de données traités. Les cinquième et sixième étapes sont identiques aux étapes effectuées dans un récepteur à égalisation de domaine fréquentiel à porteuse unique connu sous l'abréviation SC-FDE (single Carrier Frequency Domain Equalization) connues de l'homme du métier.

Lors d'une cinquième étape, on applique ainsi une transformée de Fourier discrète inverse TFD$^{-1}$, 65, 68, pour obtenir les symboles égalisés (non décidés) et on normalise par le facteur $\eta$ calculé à la formule (5).

La sixième étape 69 consiste à appliquer un désentrelacement/ décodage des symboles émis, par exemple en tenant compte du rapport signal à bruit SNR, estimé suivant la formule (6), obtenu sur chaque groupe de deux blocs de symboles pour le calcul des rapports de tests de vraisemblance LLR (Logarithm of Likelihood ratio) connus de l'homme du métier.

La première étape du procédé selon l'invention consiste à estimer les RI fréquentielles des canaux de propagation associées aux deux voies d'émission ainsi que la matrice de corrélation du bruit total R. Ces estimations peuvent être réalisées par exemple selon deux modes de réalisation en fonction des séquences d'apprentissage utilisées dans la forme d'onde. Le principe commun utilisé pour ces deux modes de réalisation est d'estimer dans un premier temps le canal dans le domaine fréquentiel sur les séquences REF, puis de revenir dans le domaine temporel afin de « débruiter » et d'effectuer l'interpolation (de $L_{REF}$, longueur des blocs REF à $L_{DATA}$, longueur des blocs DATA) de l'estimation de canal, puis de revenir dans le domaine fréquentiel pour obtenir les RI fréquentielles utilisées dans le procédé suivant l'invention.

L'objectif de l'algorithme est d'estimer la RI fréquentielle du canal de propagation multivoies associée à chaque antenne d'émission $k_e$ :

$$\boldsymbol{h}_{k_e}(f) = [h_{k_e,1}(f) \dots h_{k_e,K_r}(f)]^T, \text{ pour } f = 0, \dots, L_{DATA}\text{-}1 \text{ et } k_e = 1 \text{ et } 2, \text{ avec}$$

$$k_r \geq 1, k_r = 1, \dots, K_r. \qquad (9)$$

Les deux blocs de DATA sur lesquels le codage Alamouti par blocs a été réalisé sont démodulés à partir de la même estimation de $\boldsymbol{h}_{ke}(f)$.

Selon un premier mode de réalisation de l'invention, les séquences émises sur les deux antennes ne sont pas déduites l'une de l'autre, elles sont indépendantes, et l'algorithme est effectué suivant les étapes suivantes :

Etape 1 - effectuer une transformation de Fourier discrète TFD du signal reçu après synchronisation sur chaque séquence REF d'indice i, i = 1, ..., $N_{REF}$, pour chaque antenne de réception $k_r$ :

$$y_{k_r,i}(f) = TFD\left[x_{k_r,i}(n)\right], (10),$$

pour $n_0 \leq n < n_0 + L_{REF}$ - 1 avec $n_0$ position de synchronisation, les indices n correspondant aux échantillons temporels échantillonnés au rythme-symbole.

Etape 2 - Estimation préliminaire de la RI fréquentielle de canal sur chaque antenne d'émission $k_e$ et sur chaque antenne de réception $k_r$ :

$$h_{k_e,k_r,i}^{prélim}(f) = \frac{y_{k_r,i}(f)}{d_{k_e,i}(f)} \ (11)$$

pour $f = 0, \dots, L_{REF}$ - 1, avec $d_{ke,i}(f)$ la TFD de la séquence de référence émise sur l'antenne d'émission $k_e$ pour le bloc REF d'indice i,

La transformée de Fourrier discrète TFD de la séquence de référence est précalculée :

$$d_{k_e,i}(f) = TFD\left[d_{k_e,i}(n)\right], \text{ pour } 0 \leq f < L_{REF} - 1 \qquad (12)$$

Etape 3 - Estimation préliminaire de la RI temporelle du canal à partir d'une opération de transformée de Fourier discrète inverse, TFD$^{-1}$, sur chaque antenne d'émission $k_e$ et sur chaque antenne de réception $k_r$ :

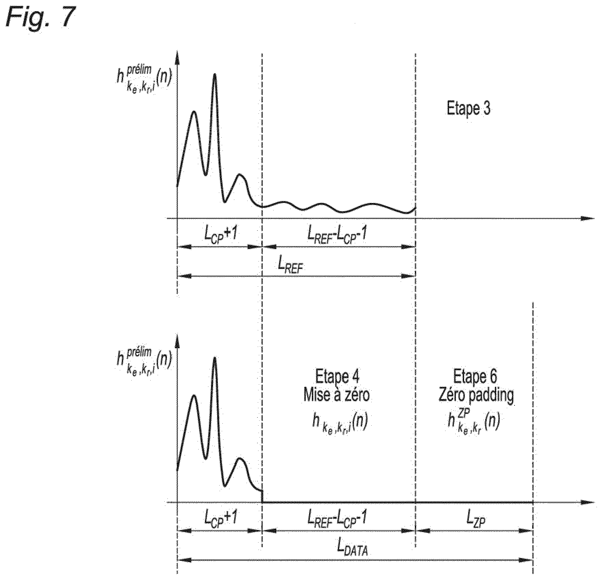

$$h_{k_e,k_r,i}^{prélim}(n) = \text{TFD}^{-1}\left[h_{k_e,k_r,i}^{prélim}(f)\right], \text{ pour } n, f = 0, \dots, L_{REF} - 1, (13) \text{ (Fig.7)}.$$

Etape 4 - Réduction de bruit de la RI temporelle préliminaire et obtention des RI temporelles associées à chaque voie d'émission par les étapes explicitées ci-après.

Afin d'améliorer la qualité de l'estimation de canal, les RI temporelles du canal $h_{ke,kr,i}$ sont forcées à zéro sur une plage pour laquelle les réponses sont supposées ne pas être affectées par le canal multi-trajets : seuls les éléments de la RI temporelle sur une longueur au moins égale à la longueur du préfixe cyclique CP sont conservés.

$$h_{k_e,k_r,i}(n) = \begin{cases} h_{k_e,k_r,i}^{prélim}(n) & \text{pour} & n \in [0; L_{CP} + i_0] \cup [L_{REF} - i_1; L_{REF} - 1] \\ 0 & \text{pour} & n \in [L_{CP} + i_0 + 1; L_{REF} - 1 - i_1] \end{cases} \quad (14)$$

Où $i_0$ et $i_1$ sont deux entiers positifs ou nuls permettant de conserver une partie plus importante de la RI temporelle du canal que la partie correspondant au préfixe cyclique (pour gérer les effets de bord) et vérifiant les conditions suivantes :

$$0 \le i_0 \le L_{REF} - L_{CP} - 1 \text{ et } 0 \le i_1 \le L_{REF} - L_{CP} - 2 - i_0$$

- si $i_0 = L_{REF} - L_{CP} - 1$, cela revient à conserver tous les éléments de la RI temporelle (et $i_1$ n'est pas utilisé),

- si $i_1 = 0$, aucun échantillon n'appartient à l'intervalle [$L_{REF} - i_1$; $L_{REF} - 1$]).

Etape 5 - Moyennage des RI temporelles « débruitées » si $N_{REF}$ est strictement supérieur à un. Cette étape n'est pas effectuée si $N_{REF}$ est égal à 1.

Pour chaque voie d'émission $k_e$ et pour chaque voie de réception $k_r$, les RI temporelles de canal obtenues sur chaque séquence REF sont moyennées sur les $N_{REF}$ séquences du palier :

$$h_{k_e,k_r}(n) = \frac{1}{N_{REF}} \sum_{i=1}^{N_{REF}} h_{k_e,k_r,i}(n), \quad \text{pour} \ n \in [0; L_{REF} - 1] \qquad (15)$$

Lors des étapes suivantes, le procédé va estimer la RI fréquentielle du canal multivoies sur la longueur $L_{DATA}$.

A partir de l'estimation de la RI temporelle du canal obtenue à l'issue de la cinquième étape sur chaque séquence REF du palier, la RI fréquentielle du canal utilisée pour démoduler les blocs de DATA est obtenue à partir des deux étapes suivantes, effectuées pour chaque antenne d'émission $k_e$, $k_e$ = 1,2, et chaque antenne de réception $k_r$, $k_r$ = 1, ..., $K_r$.

Etape 6 : Interpolation de la RI temporelle du canal sur la longueur $L_{DATA}$ si $L_{DATA} > L_{REF}$.

Une opération de « zéro-padding » illustrée à la figure 7 est appliquée sur les RI temporelles moyennées afin de permettre l'interpolation de la RI de la longueur $L_{REF}$ à la longueur $L_{DATA}$ :

$$\begin{cases} h_{k_e,k_r}^{ZP}(n) = h_{k_e,k_r}(n) & \text{pour} & n = [0; L_{CP} + i_0] \\ h_{k_e,k_r}^{ZP}(n) = 0 & \text{pour} & n = [L_{CP} + i_0 + 1; L_{DATA} - 1 - i_1] \\ h_{k_e,k_r}^{ZP}(n) = h_{k_e,k_r}(n - L_{DATA} + L_{REF}) & \text{pour} & n = [L_{DATA} - i_1; L_{DATA} - 1] \end{cases} \quad (16)$$

Avec ZP : le zéro padding ou remplissage à zéro (ZP)

Etape 7 : l'estimation des RI fréquentielles de canal sur la longueur $L_{DATA}$, notées $h_{ke, kr}(f)$ est alors réalisée à l'aide de la TFD des RI temporelles du canal « zéro-paddées » :

$$h_{k_e,k_r}(f) = TFD\left[h_{k_e,k_r}^{ZP}(n)\right] \text{ pour } n, f = 0, ..., L_{DATA} - 1. \ (17)$$

Etape 8 : Afin d'estimer la matrice de corrélation du bruit total R, on initialise dans un premier temps, pour chaque antenne de réception $k_r$ et sur chaque séquence REF $i$, les échantillons de bruit $b_{kr,i}(n)$ à partir des échantillons de la RI temporelle du canal $h_{1,k_r,i}^{prélim}(n)$ estimée pour l'une des deux antennes d'émission (la première par exemple comme décrit dans la suite de ce document) : $b_{k_r,i}(n) = h_{1,k_r,i}^{prélim}(n)$ (18)

pour

$$n \in I_b = [L_{CP} + i_0 + 1; L_{REF} - 1 - i_1]$$

avec :

$$i = 1, \dots, N_{REF}$$

$$k_r = 1, \dots, K_r$$

On note bien) le vecteur bruit reçu sur chaque séquence i

$$\boldsymbol{b}_i(n) = [b_{1,i}(n) \dots b_{K_r,i}(n)]^T, \text{pour } n \in I_b \quad (19)$$

La matrice de corrélation $\hat{R}$ est ensuite estimée en utilisant les échantillons de bruit estimés sur l'ensemble des séquences d'apprentissage :

$$\hat{R} = \frac{1}{N_{REF}} \sum_{i=1}^{N_{REF}} \left( \sum_{n \in I_b} \boldsymbol{b}_i(n) \boldsymbol{b}_i(n)^H \right). \quad (20)$$

Selon un deuxième mode de réalisation de l'invention, les séquences d'apprentissage permettant l'estimation de canal sont formées à partir d'une séquence Cazac et émises sur les deux antennes d'émission suivant le schéma de la figure 4. L'estimation de canal exploite alors le fait que la séquence émise sur la deuxième antenne d'émission se déduit de la séquence émise sur la première antenne par un décalage cyclique ou shift cyclique de $L_c$ symboles afin de diminuer la puissance de calcul des étapes 2 à 4 en exploitant les propriétés de la TFD, l'étape 1 restant inchangée. Dans la suite de la description, on choisit $L_c = L_{REF}/2$ .

Pour estimer la RI fréquentielle sur chaque voie d'émission $k_e$, $k_e$ = 1, ..., $K_e$ et sur chaque voie de réception $k_r$, $k_r$ = 1, ..., $K_r$, et sur chaque séquence d'apprentissage i, i = 1, ..., $N_{REF}$, le procédé consiste à passer par l'estimation de la RI temporelle du canal sur chaque voie de réception $k_r$ et sur chaque séquence d'apprentissage i sur les étapes 2 à 3. A l'issue de l'étape 3, les RI temporelles associées aux deux voies d'émission $k_e$ = 1, 2 sont présentes sur la RI temporelle de canal ainsi estimée et l'étape 4 permet de « séparer » les deux RI temporelles de canal.

Etape 2 - Estimation préliminaire de la RI fréquentielle de canal sur chaque antenne de réception $k_r$ :

$$h_{k_r,i}^{prélim}(f) = \frac{y_{k_r,i}(f)}{d_i(f)}, \text{pour } f = 0, \dots, L_{REF} - 1,$$

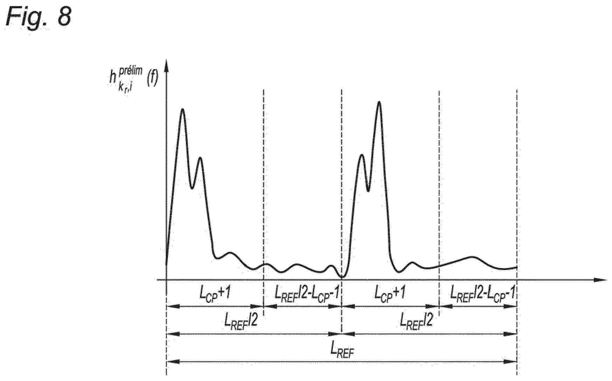

avec $d_i(f)$ la TFD de la séquence de référence émise sur la première antenne d'émission pour le bloc REF d'indice i, (22) (Fig.8).

A ce stade, contrairement au premier mode de réalisation de l'étape d'estimation de canal, cette estimée de canal prend en compte les deux antennes d'émission.

La transformée de Fourrier discrète TFD de la séquence de référence est précalculée :

$$d_i(f) = TFD[d_i(n)] , \text{pour } 0 \le f < L_{REF} - 1 \quad (23)$$

Etape 3 - Estimation préliminaire de la RI temporelle du canal à partir d'une opération de transformée de Fourrier discrète inverse, TFD$^{-1}$, sur chaque antenne de réception $k_r$:

$$h_{k_r,i}^{pr\acute{e}lim}(n) = \text{TFD}^{-1}\left[h_{k_r,i}^{pr\acute{e}lim}(f)\right], \text{ pour } n, f = 0, \ldots, L_{REF} - 1 \qquad (24)$$

A ce stade, contrairement au premier mode de réalisation de l'étape d'estimation de canal, cette estimée de canal prend également en compte les deux antennes d'émission. L'étape suivante permet à l'algorithme d'effectuer l'estimation de canal pour chaque voie d'émission.

Etape 4 - Réduction de bruit de la RI temporelle préliminaire et obtention des RI temporelles associées à chaque voie d'émission par les étapes explicitées ci-après.

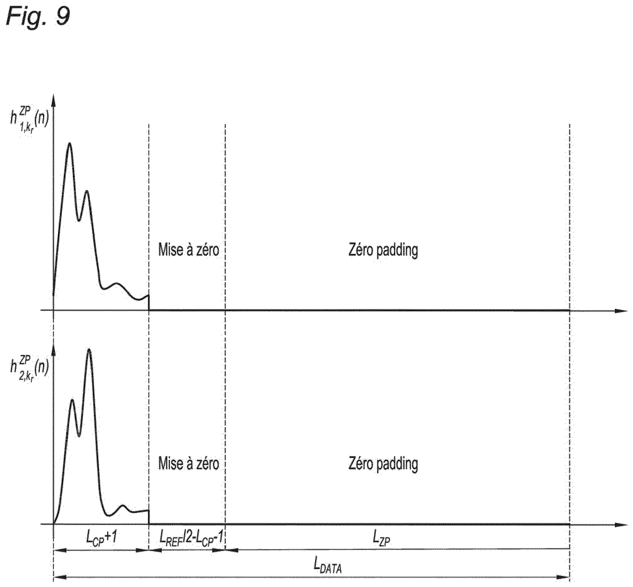

Afin d'améliorer la qualité de l'estimation de canal, les RI temporelles du canal $h_{kr,i}$ sont forcées à zéro sur une plage pour laquelle les réponses sont supposées ne pas être affectées par le canal multi-trajets, figure 9: seuls les éléments de la RI temporelle sur une longueur au moins égale à la longueur du préfixe cyclique CP sont conservés. Il faut également tenir compte du fait que les deux antennes d'émission émettent la même séquence, à un shift cyclique près de valeur $\dfrac{L_{REF}}{2}$ : la première partie de la RI temporelle obtenue correspond donc à la première antenne d'émission et la seconde partie à la seconde antenne d'émission :

$$h_{1,k_r,i}(n) = \begin{cases} h_{k_r,i}^{pr\acute{e}lim}(n) & \text{pour} & n \in [0; L_{CP} + i_0] \\ 0 & \text{pour} & n \in \left[L_{CP} + i_0 + 1; \dfrac{L_{REF}}{2} - 1 - i_1\right] \\ h_{k_r,i}^{pr\acute{e}lim}\left(n + \dfrac{L_{REF}}{2}\right) & \text{pour} & n \in \left[\dfrac{L_{REF}}{2} - i_1; \dfrac{L_{REF}}{2} - 1\right] \end{cases} \qquad (25)$$

$$h_{2,k_r,i}(n) = \begin{cases} h_{k_r,i}^{pr\acute{e}lim}\left(n + \dfrac{L_{REF}}{2}\right) & \text{pour} & n \in [0; L_{CP} + i_0] \\ 0 & \text{pour} & n \in \left[L_{CP} + i_0 + 1; \dfrac{L_{REF}}{2} - 1 - i_1\right] \\ h_{k_r,i}^{pr\acute{e}lim}(n) & \text{pour} & n \in \left[\dfrac{L_{REF}}{2} - i_1; \dfrac{L_{REF}}{2} - 1\right] \end{cases} \qquad (26)$$

Où $i_0$ et $i_1$ sont deux entiers positifs ou nuls permettant de conserver une partie plus importante de la RI temporelle du canal que la partie correspondant au préfixe cyclique (pour gérer les effets de bord) et vérifiant les conditions suivantes :

$$0 \leq i_0 \leq \frac{L_{REF}}{2} - L_{CP} - 1 \text{ et } 0 \leq i_1 \leq \frac{L_{REF}}{2} - L_{CP} - 2 - i_0$$

- si $i_0 = \dfrac{L_{REF}}{2} - L_{CP} - 1$, cela revient à conserver tous les éléments de la RI temporelle (et $i_1$ n'est pas utilisé)

- si $i_1 = 0$, aucun échantillon n'appartient à l'intervalle $\left[\dfrac{L_{REF}}{2} - i_1; \dfrac{L_{REF}}{2} - 1\right]$ ).

A l'issue de l'étape 4, l'algorithme dispose ainsi, comme dans le premier mode de réalisation de l'invention, des RI temporelles associées à chaque voie d'émission $k_e$, à chaque voie de réception $k_r$ et à chaque séquence d'apprentissage i, la seule différence résidant dans le fait que ces RI temporelles sont estimées sur une longueur $L_{REF}/2$ au lieu de $L_{REF}$. Les étapes 5 à 7 sont inchangées (en remplaçant $L_{REF}$ par $\dfrac{L_{REF}}{2}$ dans les équations (15) et (16) des étapes 5 et 6 ci-dessus) et l'étape 8 est modifiée de façon à tenir compte du fait que les échantillons de bruit ne se trouvent plus sur un intervalle mais sur deux intervalles, après chacune des deux RI temporelles de canal associées à chaque voie d'émission $k_e$ présentes dans la RI temporelle globale $h_{k_r,i}^{pr\acute{e}lim}$ .

L'étape 6 de mise à zéro et de zéro padding est illustrée à la figure 9 pour $h_{1,k_r}^{ZP}(n)$ et $h_{2,k_r}^{ZP}(n)$ .

Etape 8 : Afin d'estimer la matrice de corrélation du bruit total R, on initialise dans un premier temps, pour chaque antenne de réception $k_r$ et sur chaque séquence REF i, les échantillons de bruit $b_{kr,i}(n)$ à partir des échantillons de la RI temporelle du canal $h_{k_r,i}^{prélim}(n)$ estimée :

$$b_{k_r,i}(n) = h_{k_r,i}^{prélim}(n) \ (27)$$

pour

$$n \in I_b = \left[L_{CP} + i_0 + 1; \frac{L_{REF}}{2} - 1 - i_1\right] \cup \left[\frac{L_{REF}}{2} + L_{CP} + i_0 + 1; L_{REF} - 1 - i_1\right]$$

avec :

$$\mid i = 1, \dots, N_{REF}$$

$$k_r = 1, \dots, K_r$$

On note $b_i(n)$ le vecteur bruit reçu sur chaque séquence i

$$\boldsymbol{b_i}(n) = [b_{1,i}(n) \dots b_{K_r,i}(n)]^T, \text{pour } n \in I_b \ (28)$$

On estime ensuite la matrice de corrélation $\hat{R}$ en utilisant les échantillons de bruit estimés sur l'ensemble des séquences d'apprentissage :

$$\hat{R} = \frac{1}{N_{REF}} \sum_{i=1}^{N_{REF}} \left(\sum_{n \in I_b} \boldsymbol{b_i}(n)\boldsymbol{b_i}(n)^H\right) \qquad (29)$$

Le procédé selon l'invention offre notamment comme avantage d'égaliser des signaux reçus selon un procédé peu coûteux en temps de calcul.

**Revendications**

1. Procédé de réception et d'égalisation anti-interférence d'un signal émis suivant un codage Alamouti par blocs dans un système multivoies comprenant au moins un émetteur avec $K_e$ = deux voies d'émission et un récepteur avec $K_r$ voies de réception, ledit signal comportant au moins une séquence d'apprentissage formée de symboles connus et au moins une séquence de données utiles formée de symboles inconnus à démoduler et comportant au moins les étapes suivantes :

   - Synchroniser en temps/fréquence les signaux reçus par le récepteur,
   - Estimer les réponses impulsionnelles en fréquence des canaux de propagation associés à chacune des $K_e$ voies d'émission,
   - Estimer une matrice de corrélation du bruit total, $R(f)$ ,
   - Sur chaque voie de réception k, appartenant à [ 1...$K_r$], effectuer :
   - Une transformée de Fourier discrète TFD sur un premier type de bloc de données utiles 2i, (63), $x'(2i)(f)$ = TFD(x(2i)(n)), où $x(2i)(n)$ est le vecteur signal reçu sur le bloc 2i de longueur $L_{DATA}$, avec $I = 0,..., L_{DATA}$ -1 et $n = 0,..., L_{DATA}$-1 et
   - Une opération de conjugaison, suivie d'une permutation par la matrice P de permutation cyclique avec retournement du temps utilisée pour le codage Alamouti par blocs réalisé à l'émission (64) et d'une opération de transformée de Fourier discrète TFD (66) sur un deuxième bloc de données utiles 2i + 1, $x'(2i + 1)(f)$ = TFD(Px*(2i

+ 1)(n)), où x(2i + 1)(n) est le vecteur signal reçu sur le bloc 2i + 1 de longueur $L_{DATA}$, avec l = 0,..., $L_{DATA}$ -1 et n = 0,..., $L_{DATA}$-1

Où * est l'opérateur de conjugaison et la matrice P est une matrice de permutation cyclique, avec retournement du temps, définie par la relation suivante sur un bloc de symboles utiles a(n) de longueur $L_{DATA}$ :

$$P\,[a(0), \ldots, a(L_{DATA} - 1)] = [a(n), \ldots, a(0), a(L_{DATA} - 1), \ldots, a(n + 1)])$$

où il existe $L_{DATA}$ matrices P possibles, chacune étant définie par le premier élément a(n) du bloc de sortie de la permutation par la matrice P, la même matrice de permutation à l'émission et à la réception étant utilisée.

- Calculer des vecteurs de pondérations $w_{ke}(f)$ associés à chacune des voies d'émission ($k_e = 1,..,Ke = 2$), (601, 602) :

$$\boldsymbol{w_{k_e}}(f) = \frac{R(f)^{-1}\boldsymbol{h_{k_e}}(f)}{1 + \sum_{e=1}^{Ke}\boldsymbol{h_e}(f)^H R(f)^{-1}\boldsymbol{h_e}(f)}$$

avec $R(f)^{-1}$ l'inverse de la matrice de corrélation du bruit total, $\boldsymbol{h_{ke}}(f)$ le vecteur contenant les réponses impulsionnelles fréquentielles du canal de propagation sur les $K_r$ voies de réception pour la voie d'émission $k_e$ $f$=0,...., $L_{DATA}$-1 l'indice de la fréquence,

- Effectuer un filtrage sur chaque fréquence des deux blocs de données utiles à l'aide des pondérations $w_{ke}(f)$ pour $k_e$ = 1 et $k_e$ = 2

sur le bloc 2i avec :

$$y(2i)(f) = \boldsymbol{w_1^H}(f)\,\boldsymbol{x'}(2i)(f) + \boldsymbol{w_2^T}(f)\,\boldsymbol{x'}(2i + 1)(f)\,,\text{pour } f = 0, \ldots, L_{DATA} - 1$$

(603), $\boldsymbol{w_1^H}$ transposé conjugué du vecteur de pondération pour $k_e$ =1, $\boldsymbol{w_2^T}$ transposé du vecteur de pondération pour $k_e$ =2,

sur le bloc 2i + 1 avec :

$$y(2i + 1)(f) = \boldsymbol{w_2^H}(f)\,\boldsymbol{x'}(2i)(f) - \boldsymbol{w_1^T}(f)\,\boldsymbol{x'}(2i + 1)(f),\text{pour } f = 0, \ldots, L_{DATA} -$$

1 (604), afin d'estimer respectivement les symboles correspondant au bloc 2*i* et au bloc 2i + 1,

- Effectuer une opération de transformée de Fourier inverse TFD$^{-1}$ sur les signaux y(2i)(f) et y(2i + 1)(f) (65, 68) pour obtenir une estimation des symboles émis respectivement sur les blocs 2i et 2i + 1 et décoder (69) les symboles utiles émis.

2. Procédé selon la revendication 1 **caractérisé en ce que** l'on utilise deux blocs de données *2i et 2i* + 1 consécutifs pour coder à l'émission et estimer les symboles à la réception.

3. Procédé selon l'une des revendications 1 ou 2 **caractérisé en ce qu'**il comporte en outre une étape de normalisation des symboles estimés en sortie de la transformée de Fourier inverse TFD$^{-1}$ par un facteur $\eta$ défini par son estimée :

$$\hat{\eta} = \frac{1}{L_{DATA}}\sum_{f=0}^{L_{DATA}-1}\frac{\boldsymbol{h_1}(f)^H R(f)^{-1}\boldsymbol{h_1}(f) + \boldsymbol{h_2}(f)^H R(f)^{-1}\boldsymbol{h_2}(f)}{1 + \boldsymbol{h_1}(f)^H R(f)^{-1}\boldsymbol{h_1}(f) + \boldsymbol{h_2}(f)^H R(f)^{-1}\boldsymbol{h_2}(f)}.$$

4. Procédé selon la revendication 3 **caractérisé en ce que** l'étape de décodage (69) des symboles prend en compte la valeur du rapport signal sur bruit estimé $\widehat{SNR} = \frac{\hat{\eta}}{1-\hat{\eta}}$ obtenu sur chaque groupe de deux blocs de symboles pour le calcul des rapports de vraisemblance LLR utilisés pour le décodage.

**5.** Procédé selon l'une des revendications 1 à 4 **caractérisé en ce que** l'on utilise pour les séquences d'apprentissage des séquences indépendantes sur les voies d'émission.

**6.** Procédé selon la revendication 5 **caractérisé en ce que** l'on estime la réponse impulsionnelle fréquentielle du canal associée à chaque antenne d'émission $k_e$ et à chaque chaque antenne de réception $k_r$ pour $f = 0, ..., L_{DATA}-1$ en exécutant les étapes suivantes :

- Effectuer une transformation de Fourier discrète TFD du signal reçu après synchronisation sur chaque séquence de référence REF d'indice $i$, $i = 1, ..., N_{REF}$, $N_{REF}$ étant le nombre de séquences de référence dans un palier ($N_{REF} \geq 1$), pour chaque antenne de réception $k_r$: $y_{kr,i}(f) = TFD[x_{kr,i}(n)]$, où $x_{kr,i}$ est le signal reçu sur la voie de réception $k_r$ et la séquence REF i pour $n_0 \leq n < n_0 + L_{REF} - 1$ avec $n_0$ la position de synchronisation, les indices $n$ correspondant aux échantillons temporels échantillonnés au rythme-symbole, avec $a \leq f < L_{REF} - 1$ où $L_{REF}$ est le nombre de symboles de la séquence REF
- Précalculer la transformée de Fourier discrète TFD de la séquence de référence émise sur l'antenne d'émission $k_e$ pour le bloc REF d'indice i, avec :

$$d_{k_e,i}(f) = TFD\big[d_{k_e,i}(n)\big] \text{ pour } 0 \leq f < L_{REF} - 1 \,,$$

$d_{ke,i}(f)$ étant la TFD de la séquence de référence émise sur l'antenne d'émission $k_e$ pour la séquence REF d'indice i:

- Effectuer une estimation préliminaire de la réponse impulsionnelle fréquentielle du canal :

$$h_{k_e,k_r,i}^{prélim}(f) = \frac{y_{k_r,i}(f)}{d_{k_e,i}(f)}, \text{ pour } f = 0, ..., L_{REF} - 1,$$

- Effectuer une estimation préliminaire de la réponse impulsionnelle temporelle du canal à partir d'une opération de transformée de Fourier discrète inverse, TFD$^{-1}$, pour chaque bloc REF d'indice i, sur chaque antenne d'émission $k_e$ et sur chaque antenne de réception $k_r$:

$$h_{k_e,k_r,i}^{prélim}(n) = \text{TFD}^{-1}\big[h_{k_e,k_r,i}^{prélim}(f)\big], \text{ pour } n, f = 0, ..., L_{REF} - 1,$$

- Réduire le bruit de la réponse impulsionnelle temporelle préliminaire et obtenir des réponses impulsionnelles temporelles associées à chaque voie d'émission par les deux étapes suivantes :

- Forcer à zéro les réponses impulsionnelles temporelles du canal $h_{ke,kr i}$ sur une plage pour laquelle les réponses ne contiennent pas d'influence des multi-trajets utiles, en dehors de la taille du préfixe cyclique CP :

$$h_{k_e,k_r,i}(n) = \begin{cases} h_{k_e,k_r,i}^{prélim}(n) & \text{pour} \quad n \in [0; L_{CP} + i_0] \cup [L_{REF} - i_1; L_{REF} - 1] \\ 0 & \text{pour} \quad n \in [L_{CP} + i_0 + 1; L_{REF} - 1 - i_1] \end{cases}$$

où $i_0$ et $i_1$ sont deux entiers positifs ou nuls, $L_{CP}$ est le nombre de symboles du préfixe cyclique CP, utilisé sur chaque séquence de référence REF et chaque séquence de données utiles DATA, et la taille totale de la séquence REF est égale à $L_{REF}+L_{CP}$
- Pour chaque voie d'émission $k_e$ et pour chaque voie de réception $k_r$ moyenner les réponses impulsionnelles temporelles de canal obtenues sur chaque séquence REF sur les $N_{REF}$ séquences du palier (dans le cas où $N_{REF} > 1$) :

$$h_{k_e,k_r}(n) = \frac{1}{N_{REF}} \sum_{i=1}^{N_{REF}} h_{k_e,k_r,i}(n), \quad \text{pour } n \in [0; L_{REF} - 1]$$

- Déterminer la réponse impulsionnelle fréquentielle du canal utilisée pour démoduler les blocs de données par les deux étapes suivantes :

    - Appliquer une opération de « zéro-padding » sur les réponses impulsionnelles temporelles moyennées afin de permettre l'interpolation de la réponse impulsionnelle de la longueur $L_{REF}$ à la longueur $L_{DATA}$ (dans le cas où $L_{DATA} > L_{REF}$) :

$$\begin{cases} h_{k_e,k_r}^{ZP}(n) = h_{k_e,k_r}(n) & \text{pour} & n = [0; L_{CP} + i_0] \\ h_{k_e,k_r}^{ZP}(n) = 0 & \text{pour} & n = [L_{CP} + i_0 + 1; L_{DATA} - 1 - i_1] \\ h_{k_e,k_r}^{ZP}(n) = h_{k_e,k_r}(n - L_{DATA} + L_{REF}) & \text{pour } n = [L_{DATA} - i_1; L_{DATA} - 1] \end{cases}$$

avec ZP : le zéro padding ou remplissage à zéro (ZP)
- Estimer les réponses impulsionnelles de canal sur la longueur $L_{DATA}$, notées $h_{k_e, k_r}(f)$ à l'aide de la transformée de Fourier des réponses impulsionnelles temporelles du canal « zéro-paddées »

$$h_{k_e,k_r}(f) = TFD\big[h_{k_e,k_r}^{ZP}(n)\big] \text{ pour } n, f = 0, ..., L_{DATA} - 1.$$

7. Procédé selon la revendication 6 **caractérisé en ce que** l'on estime la matrice de corrélation du bruit total R(f) = $\hat{R}$ en utilisant les échantillons de bruit estimés sur l'ensemble des séquences d'apprentissage :

$$\hat{R} = \frac{1}{N_{REF}} \sum_{i=1}^{N_{REF}} \left( \sum_{n \in I_b} \boldsymbol{b}_i(n) \boldsymbol{b}_i(n)^H \right)$$

avec le vecteur de bruit reçu pour chaque échantillon n de chaque séquence d'apprentissage i = 1, ..., $N_{REF}$ , estimé sur les échantillons de la réponse impulsionnelle temporelle préliminaire du canal associée à l'une des deux antennes d'émission correspondant aux échantillons de bruit pour $n \in I_b = [L_{CP} + i_0 + 1; L_{REF} - 1 - i_1]$

$$\boldsymbol{b}_i(n) = [b_{1,i}(n) ... b_{K_r,i}(n)]^T, \text{pour } n \in I_b = [L_{CP} + i_0 + 1; L_{REF} - 1 - i_1]$$

avec $b_{k_r,i}(n) = h_{1,k_r,i}^{prélim}(n)$ .

8. Procédé selon l'une des revendications 1 à 4 **caractérisé en ce que** l'on utilise des séquences de Cazac pour les séquences d'apprentissage, la deuxième voie d'émission émettant la même séquence que la première voie, après avoir appliqué un décalage cyclique $L_c = L_{REF}/2$

9. Procédé selon la revendication 8 **caractérisé en ce que** l'on estime la réponse impulsionnelle fréquentielle du canal associée à chaque antenne d'émission $k_e$ et à chaque chaque antenne de réception $k_r$ pour $f = 0, ..., L_{DATA}-1$ en exécutant les étapes suivantes :

    - Effectuer une transformation de Fourier discrète TFD du signal reçu après synchronisation sur chaque séquence de référence REF associée à un bloc de données :

$$y_{kr,i}(f) = TFD\left[x_{kr,i}(n)\right], \text{ pour } n_0 \leq n < n_0 + L_{REF} - 1$$

avec $n_0$ la position de synchronisation, les indices n correspondant aux échantillons temporels échantillonnés au rythme-symbole et avec $0 \leq f < L_{REF} - 1$,

- Précalculer la transformée de Fourier discrète de la séquence de référence émise sur la première antenne d'émission pour le bloc d'indice i :

$$d_i(f) = TFD[d_i(n)], \text{ pour } 0 \leq f < L_{REF} - 1:$$

- Effectuer une estimation préliminaire de la réponse impulsionnelle fréquentielle du canal :

$$h_{k_r,i}^{prélim}(f) = \frac{y_{k_r,i}(f)}{d_i(f)}, \text{ pour } f = 0, \ldots, L_{REF} - 1,$$

- Effectuer une estimation préliminaire de la réponse impulsionnelle temporelle du canal à partir d'une opération de transformée de Fourier inverse, TFD$^{-1}$ :

$$h_{k_r,i}^{prélim}(n) = \text{TFD}^{-1}\left[h_{k_r,i}^{prélim}(f)\right], \text{ pour } n, f = 0, \ldots, L_{REF} - 1$$

- Séparer les réponses impulsionnelles temporelles du canal correspondant à chaque voie d'émission dans la réponse impulsionnelle temporelle $h_{k_r,i}^{prélim}(n)$ et forcer à zéro les réponses impulsionnelles temporelles du canal sur une plage pour laquelle les réponses ne contiennent pas d'influence des multi-trajets utiles, en dehors de la taille du CP :

$$h_{1,k_r,i}(n) = \begin{cases} h_{k_r,i}^{prélim}(n) & \text{pour} & n \in [0; L_{CP} + i_0] \\ 0 & \text{pour} & n \in \left[L_{CP} + i_0 + 1; \frac{L_{REF}}{2} - 1 - i_1\right] \\ h_{k_r,i}^{prélim}\left(n + \frac{L_{REF}}{2}\right) & \text{pour} & n \in \left[\frac{L_{REF}}{2} - i_1; \frac{L_{REF}}{2} - 1\right] \end{cases}$$

$$h_{2,k_r,i}(n) = \begin{cases} h_{k_r,i}^{prélim}\left(n + \frac{L_{REF}}{2}\right) & \text{pour} & n \in [0; L_{CP} + i_0] \\ 0 & \text{pour} & n \in \left[L_{CP} + i_0 + 1; \frac{L_{REF}}{2} - 1 - i_1\right] \\ h_{k_r,i}^{prélim}(n) & \text{pour} & n \in \left[\frac{L_{REF}}{2} - i_1; \frac{L_{REF}}{2} - 1\right] \end{cases}$$

- Pour chaque voie d'émission $k_e$ et pour chaque voie de réception $k_r$, moyenner les réponses impulsionnelles temporelles de canal obtenues sur chaque séquence REF sur les $N_{REF}$ séquences du palier (dans le cas où $N_{REF} > 1$ :

$$h_{k_e,k_r}(n) = \frac{1}{N_{REF}} \sum_{i=1}^{N_{REF}} h_{k_e,k_r,i}(n), \quad \text{pour } n \in [0; L_{REF}/2 - 1]$$

- Déterminer la réponse impulsionnelle fréquentielle du canal utilisée pour démoduler les blocs de données par les deux étapes suivantes :

- Appliquer une opération de « zéro-padding » sur les réponses impulsionnelles temporelles moyennées afin de permettre l'interpolation de la réponse impulsionnelle de la longueur $L_{REF}/2$ à la longueur $L_{DATA}$ (dans le cas où $L_{DATA} > L_{REF}/2$) :

$$\begin{cases} h_{k_e,k_r}^{ZP}(n) = h_{k_e,k_r}(n) & \text{pour} & n = [0; L_{CP} + i_0] \\ h_{k_e,k_r}^{ZP}(n) = 0 & \text{pour} & n = [L_{CP} + i_0 + 1; L_{DATA} - 1 - i_1] \\ h_{k_e,k_r}^{ZP}(n) = h_{k_e,k_r}(n - L_{DATA} + L_{REF}/2) & \text{pour} & n = [L_{DATA} - i_1; L_{DATA} - 1] \end{cases}$$

avec ZP : le zéro padding ou remplissage à zéro (ZP),
où $i_0$ et $i_1$ sont deux entiers positifs ou nuls

- Estimer les réponses impulsionnelles de canal sur la longueur $L_{DATA}$, notées $h_{ke,kr}(f)$ à l'aide de la transformée de Fourier des réponses impulsionnelles temporelles du canal « zéro-paddées »,

$$h_{k_e,k_r}(f) = TFD\left[h_{k_e,k_r}^{ZP}(n)\right] \text{ pour } n, f = 0, \dots, L_{DATA} - 1.$$

**10.** Procédé selon la revendication 9 **caractérisé en ce que** l'on estime la matrice de corrélation du bruit total R(f) = R en utilisant les échantillons de bruit estimés sur l'ensemble des séquences d'apprentissage :

$$\hat{R} = \frac{1}{N_{REF}} \sum_{i=1}^{N_{REF}} \left( \sum_{n \in I_b} \boldsymbol{b}_i(n)\boldsymbol{b}_i(n)^H \right)$$

Avec le vecteur de bruit reçu pour chaque échantillon n de chaque séquence d'apprentissage i = 1, ..., $N_{REF}$, estimé sur les échantillons de la réponse impulsionnelle temporelle préliminaire du canal correspondant aux échantillons de bruit pour

$$n \in I_b = \left[L_{CP} + i_0 + 1; \frac{L_{REF}}{2} - 1 - i_1\right] \cup \left[\frac{L_{REF}}{2} + L_{CP} + i_0 + 1; L_{REF} - 1 - i_1\right]$$

$$\boldsymbol{b}_i(n) = [b_{1,i}(n) \dots b_{K,i}(n)]^T,$$

avec

$$b_{k_r,i}(n) = h_{k_r,i}^{prélim}(n).$$

**11.** Système de réception et d'égalisation anti-interférence d'un signal émis suivant un codage Alamouti par blocs dans un système multivoies comprenant au moins un émetteur avec $K_e$ = *deux* voies de réception et un récepteur avec $K_r$ voies de réception, ledit signal comportant au moins une séquence d'apprentissage formée de symboles connus et au moins une séquence de données utiles formée de symboles inconnus à démoduler, **caractérisé en ce que** le récepteur (52) comporte un processeur (523) relié aux voies de réception et configuré pour exécuter les étapes suivantes du procédé selon l'une des revendications 1 à 10.

**12.** Système de réception et d'égalisation selon la revendication 11 **caractérisé en ce que** le système est un système de communication 4G.

**Patentansprüche**

**1.** Verfahren zum störungsarmen Empfangen und Entzerren eines nach einer blockweisen Alamouti-Codierung übertragenen Signals in einem Mehrwegsystem, umfassend mindestens einen Sender mit $K_e$ = zwei Übertragungswegen und einen Empfänger mit $K_r$ Empfangswegen, wobei das Signal mindestens eine aus bekannten Symbolen gebildete Lernsequenz und mindestens eine zu demodulierende Sequenz von verwertbaren Daten aufweist, die aus unbekannten Symbolen gebildet ist, und aufweisend mindestens die folgenden Schritte:

- zeit- und frequenzmäßiges Synchronisieren der von dem Empfänger empfangenen Signale,
- Schätzen der Frequenz-Impulsantworten der Verbreitungskanäle, die jedem der $K_e$ Übertragungswege zugeordnet sind,
- Schätzen einer Korrelationsmatrix des Gesamtrauschens, R(f),
- auf jedem Empfangsweg $k_r$ der zu [1...$K_r$] gehört, Ausführen von:
- einer diskreten Fourier-Transformierten TFD an einem ersten Blocktyp von verwertbaren Daten *2i*, (63), *x'(2i)(f)* = *TFD(x(2i)(n))*, worin *x(2i)(n)* das am Block *2i* der Länge $L_{DATA}$ empfangene Vektorsignal ist, wobei f = *0,...,* $L_{DATA}$ - 1 und n = *0,...,* $L_{DATA}$ - 1, und
- einer Konjugationsoperation, gefolgt von einer Permutation durch die zyklische Permutationsmatrix P mit Zeitumkehr, die für die blockweise Alamouti-Codierung verwendet wird, die bei der Übertragung (64) ausgeführt wird, und von einer Operation der diskreten Fourier-Transformierten TFD (66) an einem zweiten Block von verwertbaren Daten *2i + 1, x'(2i + 1)(f) = TFD(Px*(2i + 1)(n))*, worin *x(2i + 1)(n)* das am Block *2i + 1* der Länge $L_{DATA}$ empfangene Vektorsignal ist, wobei *f = 0,...,* $L_{DATA}$ - 1 und n = *0,...,* $L_{DATA}$ - 1,

worin * der Konjugationsoperator ist und die Matrix P eine zyklische Permutationsmatrix mit Zeitumkehr ist, die durch die folgende Beziehung an einem Block von verwertbaren Symbolen *a(n)* der Länge $L_{DATA}$ definiert ist:

$$P[a(0),..., a(L_{DATA} - 1)] = [a(n),..., a(0), a(L_{DATA} - 1),..., a(n + 1)]),$$

worin es mögliche $L_{DATA}$ Matrizen P gibt, wobei jede durch das erste Element *a(n)* des Ausgabeblocks der Permutation durch die Matrix P definiert ist, worin die gleiche Permutationsmatrix bei der Übertragung und beim Empfang verwendet wird,

- Berechnen von Gewichtungsvektoren $w_{ke}$ (f), die jedem der Übertragungswege ($k_e$ = 1, ..., Ke = 2) zugeordnet sind (601, 602):

$$w_{k_e}(f) = \frac{R(f)^{-1} h_{k_e}(f)}{1 + \sum_{e=1}^{Ke} h_e(f)^H R(f)^{-1} h_e(f)}$$

wobei $R(f)^{-1}$ der Kehrwert der Korrelationsmatrix des Gesamtrauschens ist, $h_{ke}$ (f) der Vektor ist, der die Frequenz-Impulsantworten des Verbreitungskanals auf den $K_r$ Empfangswegen für den Übertragungsweg $k_e$ enthält,
$f = 0,....,$ $L_{DATA}$ - 1 der Index der Frequenz ist,

- Ausführen einer Filterung an jeder Frequenz der zwei Blöcke von verwertbaren Daten mit Hilfe der Gewichtungen $w_{ke}$ (f) für $k_e$ = 1 und $k_e$ = 2

an dem Block 2i wobei:

$$y(2i)(f) = w_1^H(f)\, x'(2i)(f) + w_2^T(f)\, x'^{(2i+1)(f)},\ \text{für}\ f = 0,\ ...\ ,\ L_{DATA} - 1$$

(603), $w_1^H$ die konjugierte Transponierte des Gewichtungsvektors für $k_e$ = 1 ist, $w_2^T$ die Transponierte des Gewichtungsvektors für $k_e$ = 2 ist,
an dem Block *2i + 1*, wobei

$$y(2i+1)(f) = w_2^H(f)\, x'(2i)(f) - w_1^T(f)\, x'^{(2i+1)}(f),$$

*für f* = 0, ..., $L_{DATA}$ - 1 (604), um jeweils die Symbole zu schätzen, die Block *2i* und Block *2i* + 1 entsprechen,

- Ausführen einer Operation der umgekehrten Fourier-Transformierten TFD$^{-1}$ an den Signalen *y(2i)(f)* und *y(2i + 1)(f)* (65, 68), um eine Schätzung der Symbole zu erhalten, die jeweils an den Blöcken *2i* und *2i* + 1 übertragen wurden, und die übertragenen verwertbaren Symbole zu decodieren (69).

2. Verfahren nach Anspruch 1, **dadurch gekennzeichnet, dass** zwei aufeinanderfolgende Datenblöcke *2i* und *2i* + 1 zur Codierung bei der Übertragung und Schätzung der Symbole beim Empfang verwendet werden.

3. Verfahren nach einem der Ansprüche 1 oder 2, **dadurch gekennzeichnet, dass** es ferner einen Schritt zum Normalisieren der geschätzten Symbole bei Ausgabe der umgekehrten Fourier-Transformierten TFD$^{-1}$ um einen Faktor $\eta$ aufweist, der durch seine Schätzung definiert ist:

$$\hat{\eta} = \frac{1}{L_{DATA}} \sum_{f=0}^{L_{DATA}-1} \frac{h_1(f)^H R(f)^{-1} h_1(f) + h_2(f)^H R(f)^{-1} h_2(f)}{1 + h_1(f)^H R(f)^{-1} h_1(f) + h_2(f)^H R(f)^{-1} h_2(f)}.$$

4. Verfahren nach Anspruch 3, **dadurch gekennzeichnet, dass** der Schritt zum Decodieren der Symbole (69) den Wert des geschätzten Signal-Rausch-Verhältnisses $\widehat{SNR} = \frac{\hat{\eta}}{1-\hat{\eta}}$ berücksichtigt, das bei jeder Gruppe von zwei Symbolblöcken für die Berechnung der Wahrscheinlichkeitsverhältnisse LLR, die für die Decodierung verwendet werden, erhalten wird.

5. Verfahren nach einem der Ansprüche 1 bis 4, **dadurch gekennzeichnet, dass** für die Lernsequenzen unabhängige Sequenzen auf den Übertragungswegen verwendet werden.

6. Verfahren nach Anspruch 5, **dadurch gekennzeichnet, dass** die Frequenz-Impulsantwort des Kanals, die jeder Übertragungsantenne $k_e$ und jeder Empfangsantenne $k_r$ zugeordnet ist, für *f* = 0, ..., $L_{DATA}$ - 1 unter Durchführung der folgenden Schritte geschätzt wird:

- Ausführen einer diskreten Fourier-Transformation TFD des empfangenen Signals nach Synchronisation auf jeder Referenzsequenz REF mit dem Index *i*, *i* = 1, ..., $N_{REF}$, wobei $N_{REF}$ die Anzahl der Referenzsequenzen in einer Phase ($N_{REF} \geq 1$) für jede Empfangsantenne $k_r$: $y_{kr,i}$ (f) = *TFD* [$x_{kr,i}$ (n)] ist, worin $x_{kr,i}$ das auf dem Empfangsweg $k_r$ empfangene Signal und die Sequenz REF i für $n_0 \leq n \leq n_0 + L_{REF}$ - 1 ist, wobei $n_0$ die Synchronisationsposition ist, wobei die Indizes *n* den ZeitAbtastungswerten entsprechen, die im Rhythmussymbol abgetastet wurden, wobei $0 \leq f < L_{REF}$ - 1, worin $L_{REF}$ die Anzahl der Symbole der Sequenz REF ist,
- Vorberechnen der diskreten Fourier-Transformierten TFD der auf der Übertragungsantenne $k_e$ übertragenen Referenzsequenz für den Block REF mit dem Index i, wobei:

$$d_{k_e,i}(f) = TFD\big[d_{k_e,i}(n)\big] \text{ für } 0 \leq f < L_{REF} - 1,$$

wobei $d_{ke,i}(f)$ die TFD der auf der Übertragungsantenne $k_e$ übertragenen Referenzsequenz für die Sequenz REF mit dem Index i ist;
- Ausführen einer vorläufigen Schätzung der Frequenz-Impulsantwort des Kanals:

$$h_{k_e,k_r,i}^{prélim}(f) = \frac{y_{k_r,i}(f)}{d_{k_e,i}(f)}, \text{ für } f = 0, ..., L_{REF} - 1,$$

- Ausführen einer vorläufigen Schätzung der Zeit-Impulsantwort des Kanals anhand einer Operation der umgekehrten diskreten Fourier-Transformierten TFD$^{-1}$ für jeden Block REF mit dem Index i an jeder Übertragungsantenne $k_e$ und an jeder Empfangsantenne $k_r$:

$$h_{k_e,k_r,i}^{pr\acute{e}lim}(n) = \text{TFD}^{-1}\left[h_{k_e,k_r,i}^{pr\acute{e}lim}(f)\right], \text{ für } n,f = 0,\dots,L_{REF}-1,$$

- Verringern des Rauschens der vorläufigen Zeit-Impulsantwort und Erhalten von Zeit-Impulsantworten, die jedem Übertragungskanal zugeordnet sind, durch die zwei folgenden Schritte:
- Bringen der Zeit-Impulsantworten des Kanals $h_{ke,\,kri}$ auf Null in einem Bereich, in dem die Antworten keinen Einfluss der verwertbaren Mehrfachwege enthalten, außerhalb der Größe des zyklischen Präfixes CP:

$$h_{k_e,k_r,i}(n) = \begin{cases} h_{k_e,k_r,i}^{pr\acute{e}lim}(n) & \text{für} & n \in [0; L_{CP}+i_0] \cup [L_{REF}-i_1; L_{REF}-1] \\ 0 & \text{für} & n \in [L_{CP}+i_0+1; L_{REF}-1-i_1] \end{cases}$$

worin $i_0$ und $i_1$ zwei positive ganze Zahlen oder Null sind, $L_{CP}$ die Anzahl der Symbole des zyklischen Präfixes CP ist, das auf jeder Referenzsequenz REF und jeder Sequenz von verwertbaren Daten DATA verwendet wird, und die Gesamtgröße der Sequenz REF gleich $L_{REF}+L_{CP}$ ist;
- für jeden Übertragungsweg $k_e$ und für jeden Empfangsweg $k_r$ Mitteln der Zeit-Impulsantworten des Kanals, die auf jeder REF-Sequenz auf den $N_{REF}$ Sequenzen der Phase erhalten wurden (wenn $N_{REF} > 1$):

$$h_{k_e,k_r}(n) = \frac{1}{N_{REF}} \sum_{i=1}^{N_{REF}} h_{k_e,k_r,i}(n), \quad \text{für } n \in [0; L_{REF}-1]$$

- Bestimmen der Frequenz-Impulsantwort des Kanals, die verwendet wird, um die Datenblöcke zu demodulieren, durch die zwei folgenden Schritte:
- Anwenden einer "Zero-Padding"-Operation an den gemittelten Zeit-Impulsantworten, um die Interpolation der Impulsantwort der Länge $L_{REF}$ auf die Länge $L_{DATA}$ zu ermöglichen (wenn $L_{DATA} > L_{REF}$):

$$\begin{cases} h_{k_e,k_r}^{ZP}(n) = h_{k_e,k_r}(n) & \text{für} & n = [0; L_{CP}+i_0] \\ h_{k_e,k_r}^{ZP}(n) = 0 & \text{für} & n = [L_{CP}+i_0+1; L_{DATA}-1-i_1] \\ h_{k_e,k_r}^{ZP}(n) = h_{k_e,k_r}(n-L_{DATA}+L_{REF}) & \text{für} & n = [L_{DATA}-i_1; L_{DATA}-1] \end{cases}$$

wobei ZP: das Zero-Padding oder das Auffüllen auf Null (ZP);
- Schätzen der Impulsantworten des Kanals auf der Länge $L_{DATA}$, bezeichnet als $h_{ke,\,kr}$ (f), mittels der Fourier-Transformierten der dem "Zero-Padding" unterzogenen Zeit-Impulsantworten des Kanals

$$h_{k_e,k_r}(f) = TFD\left[h_{k_e,k_r}^{ZP}(n)\right] \text{ für } n,f = 0,\dots,L_{DATA}-1.$$

7. Verfahren nach Anspruch 6, **dadurch gekennzeichnet, dass** die Korrelationsmatrix des Gesamtrauschens R(f) = $\hat{R}$ unter Verwendung der Abtastungswerte des Rauschens, die an der Gesamtheit der Lernsequenzen geschätzt sind, geschätzt wird:

$$\hat{R} = \frac{1}{N_{REF}} \sum_{i=1}^{N_{REF}} \left( \sum_{n \in I_b} b_i(n)b_i(n)^H \right)$$

worin der Rauschvektor, der für jeden Abtastungswert n von jeder Lernsequenz erhalten wird, i = 1, ..., $N_{REF,}$ der an den Abtastungswerten der vorläufigen Zeit-Impulsantwort des Kanals geschätzt wird, die einer der zwei Übertragungsantennen zugeordnet ist, den Abtastungswerten des Rauschens entspricht für $n$ E $I_b$ = [$L_{CP}$ + $i_0$ + 1; $L_{REF}$ - 1 - $i_1$]

$$b_i(n) = \left[b_{1,i}(n) \dots b_{K_r,i}(n)\right]^T, \text{für } n \in I_b = [L_{CP} + i_0 + 1; L_{REF} - 1 - i_1]$$

worin

$$b_{kr,i}(n) = h_{1,kr,i}^{prélim}(n).$$

8. Verfahren nach einem der Ansprüche 1 bis 4, **dadurch gekennzeichnet, dass** Cazac-Sequenzen für die Lernsequenzen verwendet werden, wobei der zweite Übertragungsweg die gleiche Sequenz wie der erste Weg überträgt, nachdem eine zyklische Verschiebung $L_C = L_{REF/2}$ angewendet worden ist.

9. Verfahren nach Anspruch 8, **dadurch gekennzeichnet, dass** die Frequenz-Impulsantwort des Kanals, die jeder Übertragungsantenne $k_e$ und jeder Empfangsantenne $k_r$ zugeordnet ist, für $f = 0, ..., L_{DATA} - 1$ unter Durchführung der folgenden Schritte geschätzt wird:

- Ausführen einer diskreten Fourier-Transformation TFD des empfangenen Signals nach Synchronisation auf jeder Referenzsequenz REF, die einem Datenblock zugeordnet ist:

$$y_{kr,i}(f) = TFD\left[x_{kr,i}(n)\right], \text{für } n_0 \leq n < n_0 + L_{REF} - 1$$

worin $n_0$ die Synchronisationsposition ist, wobei die Indizes n den abgetasteten Zeitabtastungswerten im Rhythmussymbol entsprechen, und wobei $0 \leq f < L_{REF} - 1$,
- Vorberechnen der diskreten Fourier-Transformierten der auf der ersten Übertragungsantenne übertragenen Referenzsequenz für den Block mit dem Index i:

$$d_i(f) = TFD[d_i(n)\,], \text{für } 0 \leq f < L_{REF} - 1$$

- Ausführen einer vorläufigen Schätzung der Frequenz-Impulsantwort des Kanals:

$$h_{k_r,i}^{prélim}(f) = \frac{y_{kr,i}(f)}{d_i(f)}, \text{für } f = 0, ..., L_{REF} - 1,$$

- Ausführen einer vorläufigen Schätzung der Zeit-Impulsantwort des Kanals anhand einer Operation der umgekehrten Fourier-Transformierten $TFD^{-1}$;

$$h_{k_r,i}^{prélim}(n) = TFD^{-1}\left[h_{k_r,i}^{prélim}(f)\right], \text{für } n, f = 0, ..., L_{REF} - 1$$

- Trennen der Zeit-Impulsantworten des Kanals entsprechend jedem Übertragungsweg in der Zeit-Impulsantwort $h_{kr,i}^{prélim}(n)$ und Bringen der Zeit-Impulsantworten des Kanals auf Null in einem Bereich, in dem die Antworten keinen Einfluss der verwertbaren Mehrfachwege enthalten, außerhalb der Größe des CP:

$$h_{1,k_r,i}(n) = \begin{cases} h_{k_r,i}^{prélim}(n) & \text{für} & n \in [0; L_{CP} + i_0] \\ 0 & \text{für} & n \in \left[L_{CP} + i_0 + 1; \frac{L_{REF}}{2} - 1 - i_1\right] \\ h_{k_r,i}^{prélim}\left(n + \frac{L_{REF}}{2}\right) & \text{für} & n \in \left[\frac{L_{REF}}{2} - i_1; \frac{L_{REF}}{2} - 1\right] \end{cases}$$

$$h_{2,k_r,i}(n) = \begin{cases} h_{k_r,i}^{prélim}\left(n + \frac{L_{REF}}{2}\right) & \text{für} & n \in [0; L_{CP} + i_0] \\ 0 & \text{für} & n \in \left[L_{CP} + i_0 + 1; \frac{L_{REF}}{2} - 1 - i_1\right] \\ h_{k_r,i}^{prélim}(n) & \text{für} & n \in \left[\frac{L_{REF}}{2} - i_1; \frac{L_{REF}}{2} - 1\right] \end{cases}$$

- für jeden Übertragungsweg $k_e$ und für jeden Empfangsweg $k_r$, Mitteln der Zeit-Impulsantworten des Kanals, die auf jeder Sequenz REF auf den $N_{REF}$ Sequenzen der Phase erhalten wurden (wenn $N_{REF} > 1$),

$$h_{k_e,k_r}(n) = \frac{1}{N_{REF}} \sum_{i=1}^{N_{REF}} h_{k_e,k_r,i}(n), \quad \text{für } n \in [0; L_{REF}/2 - 1]$$

- Bestimmen der Frequenz-Impulsantwort des Kanals, die verwendet wird, um die Datenblöcke zu demodulieren, durch die folgenden zwei Schritte:

- Anwenden einer "Zero-Padding"-Operation an den gemittelten Zeit-Impulsantworten, um die Interpolation der Impulsantwort von der Länge $L_{REF}/2$ auf die Länge $L_{DATA}$ zu ermöglichen (wenn $L_{DATA} > L_{REF}/2$);

$$\begin{cases} h_{k_e,k_r}^{ZP}(n) = h_{k_e,k_r}(n) & \text{für} & n = [0; L_{CP} + i_0] \\ h_{k_e,k_r}^{ZP}(n) = 0 & \text{für} & n = [L_{CP} + i_0 + 1; L_{DATA} - 1 - i_1] \\ h_{k_e,k_r}^{ZP}(n) = h_{k_e,k_r}(n - L_{DATA} + L_{REF}/2) & \text{für } n = [L_{DATA} - i_1; L_{DATA} - 1] \end{cases}$$

wobei ZP: das Zero-Padding oder Auffüllen auf Null (ZP);
worin $i_0$ und $i_1$ zwei positive ganze Zahlen oder Null sind,

- Schätzen der Impulsantworten des Kanals auf der Länge $L_{DATA}$, bezeichnet mit $h_{ke,kr}(f)$, mittels der Fourier-Transformierten der dem "Zero-Padding" unterzogenen Zeit-Impulsantworten des Kanals

$$h_{k_e k_r}(f) = TFD\left[h_{k_e,k_r}^{ZP}(n)\right] \text{für } n, f = 0, ..., L_{DATA} - 1.$$

10. Verfahren nach Anspruch 9, **dadurch gekennzeichnet, dass** die Korrelationsmatrix des Gesamtrauschens R(f) = $\hat{R}$ unter Verwendung der Abtastungswerte des Rauschens, die an der Gesamtheit der Lernsequenzen geschätzt sind, geschätzt wird:

$$\hat{R} = \frac{1}{N_{REF}} \sum_{i=1}^{N_{REF}} \left( \sum_{n \in I_b} b_i(n) b_i(n)^H \right)$$

wobei der Rauschvektor, der für jeden Abtastungswert n von jeder Lernsequenz i = 1, ..., $N_{REF}$ erhalten wurde, geschätzt an den Abtastungswerten der vorläufigen Zeit-Impulsantwort des Kanals, den Abtastungswerten des Rauschens entspricht für $n \in$ lb $=$

$$\left[\hat{L}_{CP} + i_0 + 1; \frac{L_{REF}}{2} - 1 - i_1\right] \cup \left[\frac{L_{REF}}{2} + L_{CP} + i_0 + 1; L_{REF} - 1 - \hat{i}_1\right]$$

$$b_i(n) = [b_{1,i}(n) \dots b_{K,i}(n)]^T,$$

wobei

$$b_{k_r,i}(n) = h_{k_r,i}^{prélim}(n).$$

11. System zum störungsarmen Empfangen und Entzerren eines gemäß einer blockweisen Alamouti-Codierung übertragenen Signals in einem Mehrwegsystem, umfassend mindestens einen Sender mit $K_e$ = zwei Empfangswegen und einem Empfänger mit $K_r$ Empfangswegen, wobei das Signal mindestens eine aus bekannten Symbolen gebildete Lernsequenz und mindestens eine zu demodulierende Sequenz von verwertbaren Daten aufweist, die aus unbekannten Symbolen gebildet ist, **dadurch gekennzeichnet, dass** der Empfänger (52) einen Prozessor (523) aufweist, der mit den Empfangswegen verbunden und dafür konfiguriert ist, die Schritte gemäß dem Verfahren nach einem der Ansprüche 1 bis 10 auszuführen.

12. System zum Empfangen und Entzerren nach Anspruch 11, **dadurch gekennzeichnet, dass** das System ein 4G-Kommunikationssystem ist.

**Claims**

1. An anti-interference equalisation and reception method for a signal transmitted according to Alamouti block coding in a multipath system comprising at least one transmitter with $K_e$ = two transmit paths and a receiver with $K_r$ receive paths, said signal having at least one training sequence formed of known symbols and at least one payload data sequence formed of unknown symbols to be demodulated and containing at least the following steps:

   - time/frequency synchronising the signals received by the receiver,
   - estimating the frequency impulse responses of the propagation channels that are associated with each of the $K_e$ transmit paths,
   - estimating a total noise correlation matrix, $R(f)$ ,
   - on each receive path $k_r$ belonging to [1 ... $K_r$], performing:
   - a discrete Fourier transform TFD on a first type of block of payload data 2i, (63), $x'(2i)(f)$ = TFD(x(2i)(n)), where $x(2i)(n)$ is the signal vector received on the block 2i of length $L_{DATA}$, with $l$ = 0,..., $L_{DATA}$ - 1 and $n$ = 0,..., $L_{DATA}$ - 1 and
   - a conjugation operation, followed by a permutation by the cyclic permutation matrix P with time reversal used for the Alamouti block coding performed on transmission (64) and a discrete Fourier transform TFD operation (66) on a second block of payload data 2i + 1, $x'(2i + 1)(f)$ = TFD($Px^*(2i + 1)(n)$), where x(2i + 1)($n$) is the signal vector received on the block 2i + 1 of length $L_{DATA}$, with $f$ = 0, ..., $L_{DATA}$ - 1 and n = 0, ..., $L_{DATA}$ - 1,

   where * is the conjugation operator and the matrix P is a cyclic permutation matrix, with time reversal, defined by the following relationship on a block of payload symbols $a(n)$ of length $L_{DATA}$:

   $$P\left[a(0), \dots, a(L_{DATA} - 1)\right] = [a(n), \dots, a(0), a(L_{DATA} - 1), \dots, a(n + 1)]),$$

   where there are $L_{DATA}$ possible P matrices, each defined by the first element $a(n)$ of the output block of the permutation by the P matrix, wherein the same permutation matrix is used on transmit and receive.

   - calculating weighting vectors $w_{ke}$ (f) that are associated with each of the transmit paths ($k_e$ = 1,.., Ke = 2), (601, 602):

$$w_{k_e}(f) = \frac{R(f)^{-1}h_{k_e}(f)}{1 + \sum_{e=1}^{Ke} h_e(f)^H R(f)^{-1} h_e(f)}$$

with $R(f)^{-1}$ the inverse of the total noise correlation matrix, $h_{ke}(f)$ the vector containing the frequency impulse responses of the propagation channel on the $K_r$ receive paths for the transmit path $k_e$
$f = 0,...., L_{DATA} - 1$ index of the frequency,

- performing a filtering on each frequency of the two blocks of payload data using weightings $w_{ke}(f)$ for $k_e = 1$ and $k_e = 2$
on the block 2i with:

$$y(2i)(f) = w_1^H(f) \, x'(2i)(f) + w_2^T(f) \, x'(2i+1)(f),$$

pour $l = 0, ..., L_{DATA} - 1$ (603), $w_1^H$ conjugate transpose of the weighting vector for $k_e = 1$, $w_2^T$ transpose of the weighting vector for $k_e = 2$,
on the block 2i + 1 with:

$$y(2i+1)(f) = w_2^H(f) \, x'(2i)(f) - w_1^T(f) \, x'(2i+1)(f),$$

pour $f = 0, ..., L_{DATA} - 1$ (604), in order to estimate, respectively, the symbols corresponding to the block 2i and to the block 2i + 1,
- performing an inverse Fourier transform TFD$^{-1}$ operation on the signals y(2i)(l) and y(2i + 1)(f) (65, 68) to obtain an estimate of the symbols transmitted, respectively, on the blocks 2i and 2i + 1 and decode (69) the transmitted payload symbols.

2. The method according to claim 1, **characterised in that** two consecutive data blocks *2i et 2i* + 1 are used for coding on transmission and estimating the symbols on reception.

3. The method according to one of claims 1 or 2, **characterised in that** it further comprises a step of normalising the estimated symbols at the output of the inverse Fourier transform TFD$^{-1}$ by a factor $\eta$ defined by its estimate:

$$\hat{\eta} = \frac{1}{L_{DATA}} \sum_{f=0}^{L_{DATA}-1} \frac{h_1(f)^H R(f)^{-1} h_1(f) + h_2(f)^H R(f)^{-1} h_2(f)}{1 + h_1(f)^H R(f)^{-1} h_1(f) + h_2(f)^H R(f)^{-1} h_2(f)}.$$

4. The method according to claim 3, **characterised in that** the step of decoding (69) the symbols takes into account the value of the estimated signal-to-noise ratio $\widehat{SNR} = \frac{\bar{\hat{\eta}}}{1 - \hat{\eta}}$ obtained on each group of two blocks of symbols for the calculation of the LLR likelihood ratios used for the decoding.

5. The method according to one of claims 1 to 4, **characterised in that**, for the training sequences, independent sequences on the transmit paths are used.

6. The method according to claim 5, **characterised in that** the frequency impulse response of the channel that is associated with each transmit antenna $k_e$ and with each receive antenna $k_r$ for $l = 0, ..., L_{DATA}-1$ is estimated by executing the following steps:

- performing a discrete Fourier transform TFD of the received signal after synchronisation on each REF sequence of index i, $i = 1, ..., N_{REF}$, $N_{REF}$ being the number of reference sequences in a stage ($N_{REF} \geq 1$), for each receive antenna $k_r$: $y_{kri}(f) = TFD[x_{kri}(n)]$, where $x_{kri}$ is the signal received on the receive channel $k_r$ and the sequence REF i for $n_0 \leq n < n_0 + L_{REF} - 1$ with $n_0$ the synchronisation position, the indices n corresponding to the time samples sampled at the symbol rate, with $0 \leq l < L_{REF} - 1$ where $L_{REF}$ is the number of symbols of sequence REF,

- precalculating the discrete Fourier transform TFD of the reference sequence transmitted over the transmit antenna $k_e$ for the REF block of index i, with:

$$d_{k_e,i}(f) = TFD\big[d_{k_e,i}(n)\big] \text{ for } 0 \leq f < L_{REF} - 1 \,,$$

$d_{ke,i}$ (f) being the TFD of the reference sequence transmitted on the transmit antenna $k_e$ for the REF sequence of index i:

- performing a preliminary estimation of the frequency impulse response of the channel:

$$h^{prélim}_{k_e,k_r,i}(f) = \frac{y_{k_r,i}(f)}{d_{k_e,i}(f)}, \text{ for } f = 0, \dots, L_{REF} - 1,$$

- performing a preliminary estimation of the time impulse response of the channel on the basis of an inverse discrete Fourier transform, TFD$^{-1}$, operation for each block REF of index i, on each transmit antenna $k_e$ and on each receive antenna $k_r$:

$$h^{prélim}_{k_e,k_r,i}(n) = \text{TFD}^{-1}\Big[h^{prélim}_{k_e,k_r,i}(f)\Big], \text{ for } n, f = 0, \dots, L_{REF} - 1,$$

- decreasing the noise of the preliminary time impulse response and obtaining time impulse responses associated with each transmit path by means of the following two steps:

- zero-forcing the time impulse responses of the channel $h_{ke,kr,i}$ over a range for which the responses do not contain any influence from the useful multipaths, aside from the size of the cyclic prefix CP:

$$h_{k_e,k_r,i}(n) = \begin{cases} h^{prélim}_{k_e,k_r,i}(n) & \text{for} & n \in [0; L_{CP} + i_0] \cup [L_{REF} - i_1; L_{REF} - 1] \\ 0 & \text{for} & n \in [L_{CP} + i_0 + 1; L_{REF} - 1 - i_1] \end{cases}$$

where $i_0$ and $i_1$ are two positive or zero integers, $L_{CP}$ is the number of symbols of the cyclic prefix CP, used on each reference sequence REF and each payload data sequence DATA, and the total size of the REF sequence is $L_{REF} + L_{CP}$
- for each transmit path $k_e$ and for each receive path $k_r$ averaging the channel time impulse responses obtained on each REF sequence over the $N_{REF}$ sequences of the stage (in the case where $N_{REF} > 1$):

$$h_{k_e,k_r}(n) = \frac{1}{N_{REF}} \sum_{i=1}^{N_{REF}} h_{k_e,k_r,i}(n), \quad \text{for } n \in [0; L_{REF} - 1]$$

- determining the frequency impulse response of the channel, used to demodulate the blocks of data by means of the following two steps:

- applying a "zero-padding" operation to the averaged time impulse responses in order to allow the interpolation of the impulse response from the length $L_{REF}$ to the length $L_{DATA}$ (in the case where $L_{DATA} > L_{REF}$):

$$\begin{cases} h^{ZP}_{k_e,k_r}(n) = h_{k_e,k_r}(n) & \text{for} & n = [0; L_{CP} + i_0] \\ h^{ZP}_{k_e,k_r}(n) = 0 & \text{for} & n = [L_{CP} + i_0 + 1; L_{DATA} - 1 - i_1] \\ h^{ZP}_{k_e,k_r}(n) = h_{k_e,k_r}(n - L_{DATA} + L_{REF}) & \text{for} & n = [L_{DATA} - i_1; L_{DATA} - 1] \end{cases}$$

with ZP: the zero padding or zero filling (ZP),
- estimating the impulse responses of the channel over the length $L_{DATA}$, denoted by $h_{ke,kr}(f)$ using the Fourier transform of the "zero-padded" time impulse responses of the channel

$$h_{k_e,k_r}(f) = TFD\left[h^{ZP}_{k_e,k_r}(n)\right] \text{ for } n, f = 0, \dots, L_{DATA} - 1.$$

**7.** The method according to claim 6, **characterised in that** the total noise correlation matrix $R(f) = \hat{R}$ is estimated by using the noise samples estimated on all of the training sequences:

$$\hat{R} = \frac{1}{N_{REF}} \sum_{i=1}^{N_{REF}} \left( \sum_{n \in I_b} b_i(n)b_i(n)^H \right)$$

with the noise vector received for each sample n of each training sequence $i = 1, \dots, N_{REF}$, estimated on the samples of the preliminary time impulse response of the channel associated with one of the two transmit antennas, corresponding to the noise samples for $n \in I_b = [L_{CP} + i_0 + 1; L_{REF} - 1 - i_1]$

$$b_i(n) = [b_{1,i}(n) \dots b_{K_r,i}(n)]^T, \text{ for } n \in I_b = [L_{CP} + i_0 + 1; L_{REF} - 1 - i_1]$$

with

$$b_{k_r,i}(n) = h^{prélim}_{1,k_r,i}(n).$$

**8.** The method according to one of claims 1 to 4, **characterised in that** CAZAC sequences are used for the training sequences, the second transmit path transmitting the same sequence as the first path, after having applied a cyclic shift $L_c = L_{REF/2}$.

**9.** The method according to claim 8, **characterised in that** the frequency impulse response of the channel that is associated with each transmit antenna $k_e$ and with each receive antenna $k_r$ for $l = 0, \dots, L_{DATA}$-1 is estimated by executing the following steps:

- performing a discrete Fourier transform TFD of the received signal after synchronisation on each reference REF sequence associated with a block of data:

$$y_{kr,i}(f) = TFD\left[x_{kr,i}(n)\right], for \, n_0 \leq n < n_0 + L_{REF} - 1$$

with $n_0$ the synchronisation position, the indices n corresponding to the time samples sampled at the symbol rate and with $0 \leq f < L_{REF}$ - 1,
- precalculating the discrete Fourier transform of the reference sequence transmitted over the first transmit antenna for the block of index i:

$$d_i(f) = TFD[d_i(n)], \text{ for } 0 \leq f < L_{REF} - 1:$$

- performing a preliminary estimation of the frequency impulse response of the channel:

$$h^{prélim}_{k_r,i}(f) = \frac{y_{kr,i}(f)}{d_i(f)}, \text{ for } f = 0, \dots, L_{REF} - 1,$$

- performing a preliminary estimation of the time impulse response of the channel on the basis of an inverse Fourier transform operation, TFD$^{-1}$:

$$h_{k_r,i}^{pr\acute{e}lim}(n) = \text{TFD}^{-1}\big[h_{k_r,i}^{pr\acute{e}lim}(f)\big], \text{ for } n, f = 0, \dots, L_{REF} - 1$$

- separating the time impulse responses of the channel corresponding to each transmit path in the time impulse response $h_{k_r,i}^{pr\acute{e}lim}(n)$ and zero-forcing the time impulse responses of the channel over a range for which the responses do not contain any influence from the useful multipaths, aside from the size of the CP:

$$h_{1,k_r,i}(n) = \begin{cases} h_{k_r,i}^{pr\acute{e}lim}(n) & \text{for} & n \in [0; L_{CP} + i_0] \\ 0 & \text{for} & n \in \left[L_{CP} + i_0 + 1; \frac{L_{REF}}{2} - 1 - i_1\right] \\ h_{k_r,i}^{pr\acute{e}lim}\left(n + \frac{L_{REF}}{2}\right) & \text{for} & n \in \left[\frac{L_{REF}}{2} - i_1; \frac{L_{REF}}{2} - 1\right] \end{cases}$$

$$h_{2,k_r,i}(n) = \begin{cases} h_{k_r,i}^{pr\acute{e}lim}\left(n + \frac{L_{REF}}{2}\right) & \text{for} & n \in [0; L_{CP} + i_0] \\ 0 & \text{for} & n \in \left[L_{CP} + i_0 + 1; \frac{L_{REF}}{2} - 1 - i_1\right] \\ h_{k_r,i}^{pr\acute{e}lim}(n) & \text{for} & n \in \left[\frac{L_{REF}}{2} - i_1; \frac{L_{REF}}{2} - 1\right] \end{cases}$$

- for each transmit path $k_e$ and for each receive path $k_r$, averaging the channel time impulse responses obtained on each REF sequence over the $N_{REF}$ sequences of the stage (in the case where $N_{REF} > 1$):

$$h_{k_e,k_r}(n) = \frac{1}{N_{REF}} \sum_{i=1}^{N_{REF}} h_{k_e,k_r,i}(n), \quad \text{for } n \in [0; L_{REF}/2 - 1]$$

- determining the frequency impulse response of the channel, used to demodulate the blocks of data by means of the following two steps:
- applying a "zero-padding" operation to the averaged time impulse responses in order to allow the interpolation of the impulse response from the length $L_{REF}/2$ to the length $L_{DATA}$ (in the case where $L_{DATA} > L_{REF}/2$):

$$\begin{cases} h_{k_e,k_r}^{ZP}(n) = h_{k_e,k_r}(n) & \text{for} & n = [0; L_{CP} + i_0] \\ h_{k_e,k_r}^{ZP}(n) = 0 & \text{for} & n = [L_{CP} + i_0 + 1; L_{DATA} - 1 - i_1] \\ h_{k_e,k_r}^{ZP}(n) = h_{k_e,k_r}(n - L_{DATA} + L_{REF}/2) & \text{for} & n = [L_{DATA} - i_1; L_{DATA} - 1] \end{cases}$$

with ZP: the zero padding or zero filling (ZP),
where $i_0$ and $i_1$ are two positive or zero integers

- estimating the impulse responses of the channel over the length $L_{DATA}$, denoted by $h_{ke,kr}(f)$ using the Fourier transform of the "zero-padded" time impulse responses of the channel,

$$h_{k_e,k_r}(f) = TFD\big[h_{k_e,k_r}^{ZP}(n)\big] \text{ for } n, f = 0, \dots, L_{DATA} - 1.$$

**10.** The method according to claim 9, **characterised in that** the total noise correlation matrix $R(f) = \hat{R}$ is estimated by using the noise samples estimated on all of the training sequences:

$$\hat{R} = \frac{1}{N_{REF}} \sum_{i=1}^{N_{REF}} \left( \sum_{n \in I_b} b_i(n) b_i(n)^H \right)$$

with the noise vector received for each sample n of each training sequence $i = 1, ..., N_{REF}$, estimated on the samples of the preliminary time impulse response of the channel, corresponding to the noise samples pour

$$n \in I_b = \left[ L_{CP} + i_0 + 1; \frac{L_{REF}}{2} - 1 - i_1 \right] \cup \left[ \frac{L_{REF}}{2} + L_{CP} + i_0 + 1; L_{REF} - 1 - i_1 \right]$$

$$b_i(n) = [b_{1,i}(n) \dots b_{K,i}(n)]^T,$$

with

$$b_{k_r,i}(n) = h_{k_r,i}^{prélim}(n).$$

11. An anti-interference equalisation and reception system for a signal transmitted according to Alamouti block coding in a multipath system comprising at least one transmitter with $K_e$ = two receive paths and a receiver with $K_r$ receive paths, said signal having at least one training sequence formed of known symbols and at least one payload data sequence formed of unknown symbols to be demodulated, **characterised in that** the receiver (52) comprises a processor (523) connected to the receive paths and configured to perform the following steps of the method according to one of claims 1 to 10.

12. The equalisation and reception system according to claim 11, **characterised in that** the system is a 4G communication system.

**Fig. 1**

Tx1 | $CP_1$ | $[\mathbf{s}(2i)]^T$ | | $CP_{1'}$ | $-[P\mathbf{s}(2i+1)]^H$ |

Tx2 | $CP_2$ | $[\mathbf{s}(2i+1)]^T$ | | $CP_{2'}$ | $[P\mathbf{s}(2i)]^H$ |

Bloc 2$i$       Bloc 2$i$+1

**Fig. 2**

CP1 | $REF_1$ | ▽ Tx1

CP2 | $REF_2$ | ▽ Tx2

**Fig. 3**

CP1 | $REF_1$ | ▽ Tx1

CP2 | $REF_2$ | ▽ Tx2

*Fig. 4*

*Fig. 5*

*Fig. 6*

Fig. 7

$h^{prélim}_{k_e,k_r,i}(n)$

Etape 3

$L_{CP}+1$    $L_{REF}-L_{CP}-1$

$L_{REF}$

$h^{prélim}_{k_e,k_r,i}(n)$

Etape 4
Mise à zéro
$h_{k_e,k_r,i}(n)$

Etape 6
Zéro padding
$h^{ZP}_{k_e,k_r}(n)$

$L_{CP}+1$    $L_{REF}-L_{CP}-1$    $L_{ZP}$

$L_{DATA}$

*Fig. 8*

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1502720
- FR 1601894
- FR 9514914
- FR 3046311 A
- FR 1501813

**Littérature non-brevet citée dans la description**

- **ALAMOUTI.** A simple transmit diversity technique for wireless communications. *IEEE Journal on Selected areas in Communications,* Octobre 1998, vol. 16 (8), 1451-1458
- **S. ZHOU ; G. GIANNAKIS.** Single-Carrier Space-Time Block-Coded Transmissions over Frequency-Selective Fading Channels. *IEEE Trans. on Info. Theory,* Janvier 2003, vol. 49 (1), 164-179